# EUROPEAN PATENT APPLICATION

(11) **EP 4 704 447 A1**
(43) Date of publication of application: **04.03.2026**
(21) Application number: 25193847.8
(22) Date of filing: 04.08.2025
(51) Int. Cl.: H04W 4/02

(54) **INFORMATION PROCESSING APPARATUS, CONTROL METHOD, AND PROGRAM**

(30) Priority: 28.08.2024 JP 2024146682
(71) Applicant: Canon Kabushiki Kaisha, Tokyo 146-8501 (JP)
(72) Inventor: YOSHIMOTO, Yuhei, Tokyo 146-8501 (JP); SHINOZUKA, Naoki, Tokyo 146-8501 (JP)
(74) Representative: Canon Europe Limited

(57) **Abstract**

A program causes a computer to function as a first execution unit configured to not execute a predetermined process for causing a user to perform an operation for allowing a predetermined application program to use a location-based service based on successful acquisition of predetermined information by the predetermined application program, and to execute the predetermined process based on failure to acquire the predetermined information by the predetermined application program.

## Description

### TECHNICAL FIELD

The present disclosure relates to an information processing apparatus, a control method, and a program.

### BACKGROUND

There is known a configuration in which, in information processing apparatuses, such as smartphones, users allow application programs to use location-based services to make the location-based services available for the application programs. Japanese Patent Laid-Open No. 2021-069052 describes allowing an application that performs Wi-Fi Direct communication to access location information in a mobile terminal.

Incidentally, with the widespread of the configuration in which application programs use location-based services, there is a demand to more appropriately perform the determination of whether the application programs are allowed to use location-based services.

### SUMMARY

The present disclosure is directed to more appropriately performing the determination of whether an application program is allowed to use location-based services.

The present disclosure in its first aspect provides a program as specified in claim 1. Optional features are specified in claims 2 to 13.

The present disclosure in its second aspect provides an information processing apparatus as specified in claim 14.

The present disclosure in its third aspect provides a control method as specified in claim 15.

Features of the present disclosure will become apparent from the following description of embodiments with reference to the attached drawings. The following description of embodiments is described by way of example. Each of the embodiments of the present invention described below can be implemented solely or as a combination of a plurality of the embodiments or features thereof where necessary or where the combination of elements or features from individual embodiments in a single embodiment is beneficial.

### BRIEF DESCRIPTION OF THE DRAWINGS

Fig. 1 is a diagram that shows an example of a communication system.
Fig. 2 is an example of a hardware configuration diagram of a terminal apparatus and a communication apparatus.
Fig. 3 is a view that shows an example of a settings screen.
Fig. 4 is a flowchart that shows an example of processes that are executed by the terminal apparatus using a predetermined app.
Figs. 5A to 5F are examples of various screens displayed by the terminal apparatus.
Fig. 6 is a view that shows an example of an inquiry screen.
Fig. 7 is a flowchart that shows an example of a connection setup process that is executed by the terminal apparatus using a predetermined app.
Fig. 8 is a flowchart that shows an example of processes that are executed by the terminal apparatus using a predetermined app.
Figs. 9A and 9B show a flowchart that shows an example of processes that are executed by the terminal apparatus using a predetermined app.
Figs. 10A and 10B are views that show examples of a guidance screen.

### DESCRIPTION OF THE EMBODIMENTS

### First Embodiment

An information processing apparatus and a communication apparatus that are included in a communication system of the present embodiment will be described. The information processing apparatus is also referred to as a terminal apparatus. In the present embodiment, a personal computer (PC) is illustrated as an example of the information processing apparatus; however, the information processing apparatus is not limited thereto. Various items, such as a smartphone, a tablet terminal, a personal digital assistant (PDA), and a digital camera, can be applied as the information processing apparatus. In the present embodiment, a printer is illustrated as an example of the communication apparatus. The printer may be an ink-jet printer that prints using ink or a laser beam printer that prints using toner. The printer may be a full-color printer capable of color printing or a monochrome printer not capable of color printing and capable of monochrome printing. In the present embodiment, the communication apparatus is not limited to a printer; any apparatus capable of performing wireless communication with the information processing apparatus can be applied as the communication apparatus. For example, a copying machine, a facsimile machine, a scanner, a smartphone, a PC, a tablet terminal, a PDA, a digital camera, an audio playback device, a television, a smart-speaker, a robot vacuum cleaner, an automatic cooking pot, and a refrigerator can be applied as the communication apparatus. A multifunction peripheral that have multiple functions, such as a copy function, a fax function, and a printing function, can be applied as the communication apparatus.

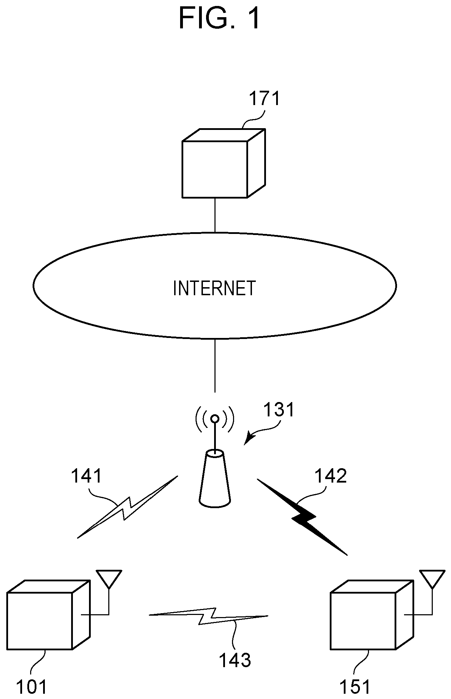

Initially, a system configuration for implementing the present embodiment will be described. Fig. 1 is a diagram that shows an example of the configuration of the communication system of the present embodiment. This system includes a communication apparatus 151, a terminal apparatus 101, an access point (AP) 131, and an external server 171.

The terminal apparatus 101 is the information processing apparatus of the present embodiment. The communication apparatus 151 is the communication apparatus of the present embodiment. The AP 131 is an access point being run by an external apparatus present outside the terminal apparatus 101 and outside the communication apparatus 151. The access point has the function to form a network. Therefore, in the present embodiment, a connection to an access point is synonymous with a connection to a network formed by the access point. The external apparatus is, for example, a wireless local area network (LAN) router. The external server 171 is a server that can provide services via the Internet to apparatuses connected to the AP 131.

In the situation where the communication apparatus 151 and the terminal apparatus 101 are connected to the AP 131, the LAN formed by the AP 131 includes the AP 131, the communication apparatus 151, and the terminal apparatus 101. On the other hand, a wide area network (WAN) includes the AP 131 and the external server 171.

In the present embodiment, the terminal apparatus 101 can communicate with the communication apparatus 151 via the AP 131 when an infrastructure connection (described later) is established. Furthermore, when a direct connection (described later) is established, the terminal apparatus 101 can communicate directly with the communication apparatus 151 by intervening the AP 131. In the following, a connection to an AP corresponds to a connection to a network formed by the AP. A single external apparatus may be running multiple APs, and a single external apparatus may be able to simultaneously form multiple networks.

In the present embodiment, a connection 141 between the terminal apparatus 101 and the AP 131 and a connection 142 between the communication apparatus 151 and the AP 131 are assumed to be connections using the communication method based on the IEEE 802.11 standards. The communication method based on the IEEE 802.11 standards is specifically Wireless Fidelity (Wi-Fi) (registered trademark). A connection 143 between the terminal apparatus 101 and the communication apparatus 151 is also assumed to be a connection using the communication method based on the IEEE 802.11 standards. However, the communication method used for the connection 143 is not limited to this configuration. The communication method may be, for example, Bluetooth (registered trademark) Low Energy (BLE), Bluetooth Classic, Wi-Fi Aware, or Near Field Communication (NFC). The AP 131 and the external server 171 can communicate via the Internet. When the AP 131 is connected to the Internet, the apparatuses connected to the AP 131 (the terminal apparatus 101 and the communication apparatus 151) can also use the Internet. The connection 141 between the terminal apparatus 101 and the AP 131 and the connection 142 between the communication apparatus 151 and the AP 131 may be connections using a wired LAN.

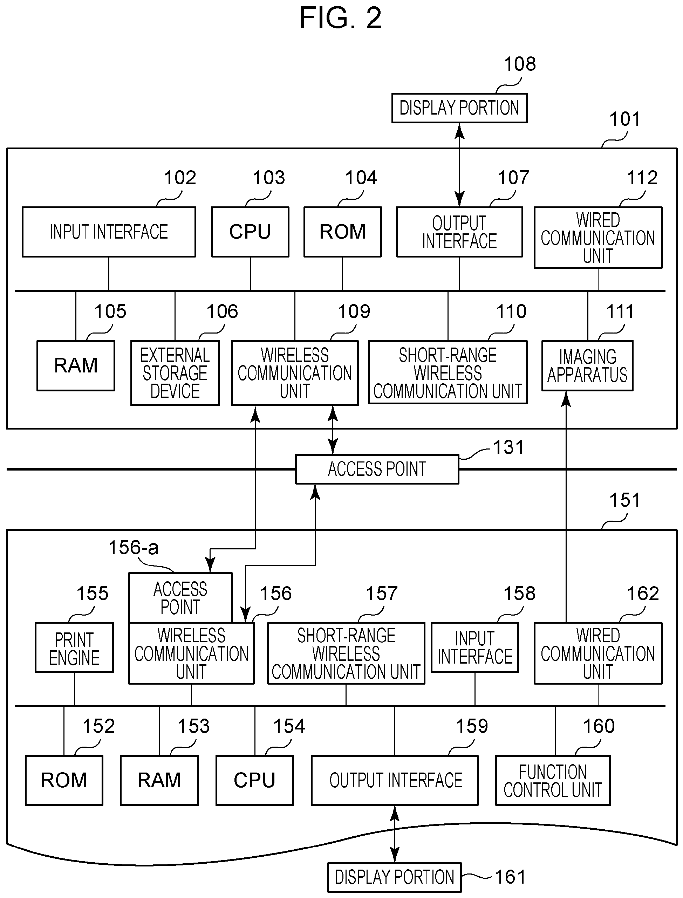

Next, the hardware configuration of the information processing apparatus of the present embodiment and the communication apparatus capable of communicating with the information processing apparatus of the present embodiment will be described with reference to the block diagram of Fig. 2. In the present embodiment, the following configuration will be described as an example; however, the present embodiment is applicable to apparatuses capable of communication with the communication apparatus and does not specifically limit the functions to those shown in the drawing.

The terminal apparatus 101 includes an input interface 102, a CPU 103, a ROM 104, a RAM 105, an external storage device 106, an output interface 107, a display portion 108, a wireless communication unit 109, a short-range wireless communication unit 110, an imaging apparatus 111, a wired communication unit 112, and the like. The computer of the terminal apparatus 101 is made up of the CPU 103, the ROM 104, the RAM 105, and the like.

The input interface 102 is an interface for accepting data input and operation instructions from a user, and is made up of a physical keyboard, buttons, a touch panel, and the like. The output interface 107 (described later) and the input interface 102 may have the same configuration to output on a screen and accept operations from the user with the same configuration.

The CPU 103 is a system control unit and controls the entire terminal apparatus 101. In the present embodiment, the CPU 103 executes control over the content of display (display control) on the display portion 108.

The ROM 104 stores fixed data, such as control programs, data tables, and an operating system (hereinafter, referred to as OS) program. The control programs, the data tables, and the OS program are run by the CPU 103. In the present embodiment, the control programs stored in the ROM 104 execute software execution controls, such as scheduling, task switching, and interrupt processing, under the control of the embedded OS stored in the ROM 104. In the present embodiment, the OS provided in the terminal apparatus 101 is assumed to be Windows (registered trademark) OS. Therefore, in the present embodiment, application programs that operate on the terminal apparatus 101 are assumed to be application programs for Windows (registered trademark) OS. In the present embodiment, the ROM 104 stores a predetermined application program (app) for controlling the communication apparatus 151. An application program is, in other words, application software. The predetermined app is an app provided by a vendor of the communication apparatus 151, and is an app for performing network recovery so that the terminal apparatus 101 and the communication apparatus 151 can communicate with each other. The predetermined app may have other functions other than the network recovery function. Examples of the other functions specifically include a function to transmit a print job to the communication apparatus 151 to perform printing (print job transmission function) and a function to transmit a scan job to the communication apparatus 151 to perform scanning (scan job transmission function). The predetermined app is installed on the terminal apparatus 101 from the outside via, for example, a webpage provided by the vendor of the communication apparatus 151. The processes described as being executed by the OS in the present embodiment are accurately processes that the CPU 103 executes in accordance with programs within the OS. Similarly, the processes described as being executed by an app are accurately processes that the CPU 103 executes in accordance with programs within the app.

The RAM 105 is made up of a static random access memory (SRAM) that needs a backup power supply, or the like. Since the RAM 105 holds data by using a primary battery (not shown) for data backup, the RAM 105 can store important data, such as program control variables, without volatilizing the data. A memory area for storing the setting information of the terminal apparatus 101, management data of the terminal apparatus 101, and the like, is also provided in the RAM 105. The RAM 105 is also used as the main memory and working memory of the CPU 103.

The external storage device 106 includes various programs, including a printing information generation program for generating printing information interpretable by the communication apparatus 151, an information transmission and reception control program for transmitting and receiving information with the communication apparatus 151 connected via the wireless communication unit 109, and other programs. The external storage device 106 also stores various pieces of information used by these programs, and image data obtained from other information processing apparatuses and the Internet.

The output interface 107 is an interface that executes control for the display portion 108 to display data and notify the status of the terminal apparatus 101.

The display portion 108 is made up of light emitting diodes (LEDs), a liquid crystal display (LCD), or the like, and displays data and notifies the status of the terminal apparatus 101. A soft keyboard with keys, such as numeral input keys, a mode setup key, a set key, a cancel key, and a power key, may be installed on the display portion 108 to accept input from the user through the display portion 108. In the present embodiment, the display portion 108 is a touch panel capable of accepting operations from the user using an operating tool, such as a finger or a pen.

The wireless communication unit 109 is a component to wirelessly connect to apparatuses, that is, the communication apparatus 151, the AP 131, and the like, to perform data communication. For example, the wireless communication unit 109 may communicate directly with the communication apparatus 151 via wireless communication, or may communicate through the AP 131 present outside the terminal apparatus 101 and the communication apparatus 151. In the present embodiment, the wireless communication method of the wireless communication unit 109 is assumed to be Wi-Fi that is the communication method based on the IEEE 802.11 standards. In the present embodiment, a wireless LAN is assumed to be a network using Wi-Fi. Therefore, the wireless communication unit 109 performs wireless LAN communication using the wireless LAN function of the terminal apparatus 101. In the present embodiment, a connection using a method of directly connecting the terminal apparatus 101 and the communication apparatus 151 without intervening an external AP is referred to as direct connection. A connection using a method of connecting the terminal apparatus 101 and the communication apparatus 151 via an external AP is referred to as infrastructure connection.

The short-range wireless communication unit 110 is a component to perform data communication with apparatuses, that is, the communication apparatus 151 or the like, using a short-range wireless communication method, and performs communication using a different communication method from the wireless communication unit 109. The short-range wireless communication unit 110 can be connected to a short-range wireless communication unit 157 of the communication apparatus 151. Examples of the communication method of the short-range wireless communication unit 110 include BLE, Bluetooth Classic, Wi-Fi Aware, and NFC.

The imaging apparatus 111 is an apparatus that converts images taken by an imaging element into digital data.

The digital data is once stored in the RAM 105. Then, the program run on the CPU 103 converts the data into a predetermined image format and saves the converted data in the external storage device 106 as image data.

The wired communication unit 112 is a component to connect via a wired connection to apparatuses, that is, the communication apparatus 151, the AP 131, and the like, to perform data communication. For example, the wired communication unit 112 communicates via a wired LAN. In the present embodiment, the wired LAN is assumed to communicate based on the Ethernet standard. The wired communication unit 112 is not limited to this configuration and may communicate via, for example, a universal serial bus (USB) cable. For example, when the terminal apparatus 101 is a smartphone, the terminal apparatus 101 does not need to include the wired communication unit 112.

The communication apparatus 151 includes a ROM 152, a RAM 153, a CPU 154, a print engine 155, a wireless communication unit 156, the short-range wireless communication unit 157, an input interface 158, an output interface 159, a function control unit 160, a display portion 161, a wired communication unit 162, and the like.

The computer of the communication apparatus 151 is made up of the ROM 152, the RAM 153, the CPU 154, and the like.

The wireless communication unit 156 is a component to wirelessly connect to apparatuses, that is, the terminal apparatus 101, the AP 131, and the like, to perform data communication. In the present embodiment, the wireless communication method of the wireless communication unit 156 is assumed to be Wi-Fi that is the communication method based on the IEEE 802.11 standards. Alternatively, Bluetooth Classic or the like may be used. The wireless communication unit 156 has an AP 156-a for connection to apparatuses, that is, the terminal apparatus 101 and the like, as an AP inside the communication apparatus 151. The AP can be connected to the wireless communication unit 109 of the terminal apparatus 101. The wireless communication unit 156 may communicate directly with the terminal apparatus 101 via the AP 156-a or may communicate with the terminal apparatus 101 via the AP 131. The AP 156-a may be hardware that functions as an AP, or the wireless communication unit 156 may operate as the AP 156-a through software that enables the wireless communication unit 156 to function as an AP. The communication apparatus 151 may be capable of internally running multiple APs with different service set identifiers (SSIDs) and passwords.

The RAM 153 is made up of a DRAM or the like that needs a backup power supply. Since the RAM 153 holds data by using a power supply (not shown) for data backup, the RAM 153 can store important data, such as program control variables, without volatilizing the data. The RAM 153 is used as the main memory and working memory of the CPU 154, and temporarily stores various pieces of information as a receiving buffer for temporarily saving printing information received from the terminal apparatus 101 or the like.

The ROM 152 stores fixed data, such as control programs, data tables, and an OS program. The control programs, the data tables, and the OS program are run by the CPU 154. In the present embodiment, the control programs stored in the ROM 152 execute software execution controls, such as scheduling, task switching, and interrupt processing, under the control of the embedded OS stored in the ROM 152. A memory area for storing data that needs to be held even when no power is supplied, that is, setting information of the communication apparatus 151 and management data of the communication apparatus 151, is provided in the ROM 152.

The CPU 154 is a system control unit and controls the entire communication apparatus 151.

The print engine 155 forms images on print media, such as paper, using recording materials, such as ink, based on information saved in the RAM 153 and print jobs received from the terminal apparatus 101 or the like, and outputs the print results. At this time, the print jobs transmitted from the terminal apparatus 101 or the like use high-speed communication with a large amount of data, so the print jobs are received via the wireless communication unit 156 capable of performing faster communication than the short-range wireless communication unit 157.

The short-range wireless communication unit 157 is a component to communicate with apparatuses, that is, the terminal apparatus 101 and the like, using a short-range wireless communication method. Examples of the communication method of the short-range wireless communication unit 157 include BLE, Bluetooth Classic, and Wi-Fi Aware.

The input interface 158 is an interface for accepting data input and operation instructions from a user, and is made up of a physical keyboard, buttons, a touch panel, and the like. The output interface 159 (described later) and the input interface 158 may have the same configuration to output on a screen and accept operations from the user with the same configuration. The output interface 159 is an interface that performs control for the display portion 161 to display data and notify the status of the communication apparatus 151.

The function control unit 160 manages function operation as to whether to simultaneously operate the functions of the communication apparatus 151.

The display portion 161 is made up of light emitting diodes (LEDs), a liquid crystal display (LCD), or the like, and displays data and notifies the status of the communication apparatus 151. A soft keyboard with keys, such as numeral input keys, a mode setup key, a set key, a cancel key, and a power key, may be installed on the display portion 161 to accept input from the user through the display portion 161.

The wired communication unit 162 is a component to connect via a wired connection to apparatuses, that is, the terminal apparatus 101, the AP 131, and the like, to perform data communication. For example, the wired communication unit 162 communicates via a wired LAN. The wired communication unit 162 is not limited to this configuration and may communicate via, for example, a USB cable.

### Direct Connection Method

A direct connection refers to a configuration in which apparatuses directly connect to each other (that is, peer to peer) without intervening an external apparatus, such as the AP 131. The direct connection is also called a peer to peer connection (P2P connection). The communication apparatus 151 is capable of operating in a mode (direct connection mode) for communication through a direct connection as one of the connection modes. In Wi-Fi communication, there are multiple modes for communication through direct connection, that is, a software AP mode and a Wi-Fi Direct (WFD) mode.

The mode for performing a direct connection via WFD is called WFD mode. WFD is a standard developed by the Wi-Fi Alliance and is included in the IEEE 802.11 communication standards. In WFD mode, after a device that is a communication partner is found through an apparatus search command, the role of a P2P group owner (GO) and the role of a P2P client are determined, and then the remaining wireless connection processes are performed. The group owner corresponds to a Wi-Fi master station, and the client corresponds to a Wi-Fi slave station. This role determination corresponds to, for example, GO Negotiation in P2P. In WFD mode in a state before the role determination is made, the communication apparatus 151 is in a state that is neither a master station nor a slave station. Specifically, initially, between apparatuses that perform communication, one of the apparatuses issues a device search command and searches for devices that connect in WFD mode. When the other device that is a communication partner is found, both devices check information about services and functions that can be supplied by the devices. This device supply information check is optional and not indispensable. This device supply information check phase corresponds to, for example, P2P Provision Discovery. Subsequently, the devices check the device supply information each other, and, as a result, determine which becomes a P2P client and which becomes a P2P group owner. Then, when the client and the group owner are determined, the devices exchange parameters for communication via WFD therebetween. Based on the exchanged parameters, the P2P client and the P2P group owner execute the remaining wireless connection processes and IP connection processes therebetween. In WFD mode, the communication apparatus 151 may definitely operate as GO without executing the above-described GO Negotiation. In other words, the communication apparatus 151 may operate in WFD mode that is Autonomous GO mode. The state in which the communication apparatus 151 is operating in WFD mode means, for example, a state in which the communication apparatus 151 is operating as GO although a connection via WFD has not been established or a state in which a connection via WFD has been established and the communication apparatus 151 is operating as GO.

In software AP mode, between devices that perform communication (for example, the terminal apparatus 101 and the communication apparatus 151), one of the devices (for example, the terminal apparatus 101) serves as a client that plays a role in requesting various services. The other device realizes the function of an AP in Wi-Fi through setting of software. The software AP corresponds to a Wi-Fi master station, and the client corresponds to a Wi-Fi slave station. In software AP mode, the client searches for a device that becomes a software AP using a device search command. When the software AP is found, the client and the software AP execute the remaining wireless connection processes (such as establishing the wireless connection) and then execute the IP connection processes (such as assigning the IP address) therebetween. Commands and parameters that are transmitted and received when a wireless connection is realized between the client and the software AP may be those defined in the Wi-Fi standards, and the description is omitted here.

In the present embodiment, when the communication apparatus 151 has established and is maintaining a direct connection, the communication apparatus 151 operates as a master station within the network to which the communication apparatus 151 belongs. The master station is an apparatus that constructs a wireless network and is an apparatus that provides parameters used for connection to the wireless network to the slave station. The parameters used for connection to a wireless network are, for example, parameters related to a channel used by the master station. The slave station receives the parameters to connect to the wireless network constructed by the master station using a channel used by the master station. In direct connection mode, since the communication apparatus 151 operates as the master station, the communication apparatus 151 can determine which frequency band is used and which channel is used for communication in direct connection mode. In the present embodiment, the communication apparatus 151 is assumed to be able to use channels corresponding to a 2.4 GHz frequency band and channels corresponding to a 5 GHz frequency band for communication in direct connection mode.

### Infrastructure Connection Method

An infrastructure connection is a connection configuration for devices to connect to an AP (for example, the AP 131) that generally controls the network of devices for communication (for example, the terminal apparatus 101 and the communication apparatus 151) to communicate with each other via the AP. The communication apparatus 151 is capable of operating in a mode for communication through an infrastructure connection (infrastructure connection mode) as one of the connection modes.

In an infrastructure connection, each of the devices searches for an AP using a device search command. When the AP is found, the device and the AP execute the remaining wireless connection processes (such as establishing the wireless connection) and then execute the IP connection processes (such as assigning the IP address) therebetween. Commands and parameters that are transmitted and received when a wireless connection is realized between the device and the AP may be those defined in the Wi-Fi standards, and the description is omitted here.

In the present embodiment, when the communication apparatus 151 operates by using an infrastructure connection, the AP 131 operates as a master station, and the communication apparatus 151 operates as a slave station. In other words, in the present embodiment, the infrastructure connection refers to a connection between the communication apparatus 151 that operates as a slave station and the apparatus that operates as a master station. When the communication apparatus 151 has established an infrastructure connection and the terminal apparatus 101 has also established an infrastructure connection with the AP 131, the communication apparatus 151 and the terminal apparatus 101 can communicate via the AP 131 therebetween. The channel used for communication in an infrastructure connection is determined by the AP 131, so the communication apparatus 151 performs communication in the infrastructure connection using the channel determined by the AP 131. In the present embodiment, the communication apparatus 151 is assumed to be able to use channels corresponding to a 2.4 GHz frequency band and channels corresponding to a 5 GHz frequency band for communication in infrastructure connection. The communication apparatus 151 can also use channels corresponding to a DFS band within the 5 GHz frequency band for communication in infrastructure connection. The terminal apparatus 101 recognizes and identifies that the communication apparatus 151 belongs to the network formed by the AP 131 and to which the terminal apparatus 101 belongs, in order to communicate with the communication apparatus 151 via the AP 131.

### Connection Setup Process

In the present embodiment, the terminal apparatus 101 performs connection setup (network setup) that is a setup for causing the communication apparatus 151 to operate in accordance with at least one communication method of infrastructure connection and direct connection, using wireless communication with the communication apparatus 151. The connection setup process in the present embodiment is executed via wireless communication, so the connection setup process is also referred to as cableless setup (CLS). The connection setup process may be executed by wired communication. The terminal apparatus 101 executes the connection setup process for the communication apparatus 151 when the predetermined app stored in the external storage device 106 or the like is running. The communication apparatus 151 is capable of operating in connection setup mode (connection setup state) that is a mode to execute the connection setup process, and executes the connection setup process in a state of operating in the connection setup mode (described later). The details of the connection setup mode will be described later.

When the terminal apparatus 101 causes the communication apparatus 151 to operate in infrastructure connection mode, the terminal apparatus 101 wirelessly transmits infrastructure setup information, which is setup information for operating the communication apparatus 151 in infrastructure connection mode, to the communication apparatus 151. The infrastructure setup information includes information about the AP 131. The information about the AP 131 includes, for example, information about the service set identifier (SSID), the password, and the frequency band.

On the other hand, when the terminal apparatus 101 causes the communication apparatus 151 to operate in direct connection mode, the terminal apparatus 101 wirelessly transmits direct setup information, which is setup information for operating the communication apparatus 151 in direct connection mode, to the communication apparatus 151. The direct setup information includes instructions for enabling the WFD function to operate as a group owner or enabling the access point settings of the communication apparatus 151. The terminal apparatus 101 acquires connection information used to directly connect to the communication apparatus 151, from the communication apparatus 151. The connection information for directly connecting to the communication apparatus 151 includes, for example, information, such as the SSID and password of the communication apparatus 151 that operates in direct connection mode.

In the present embodiment, a direct connection for connection setup between the terminal apparatus 101 and the communication apparatus 151 is used for the transmission of infrastructure setup information and direct setup information and acquiring information for direct connection to the communication apparatus 151 in the connection setup process. Then, in the present embodiment, a connection setup process using Wi-Fi is executed as a direct connection for connection setup. Alternatively, other wireless communication standards other than Wi-Fi, for example, Bluetooth, may also be used. Wired communication standards, such as a wired LAN and a universal serial bus (USB), may also be used for direct connection for connection setup.

After an infrastructure connection using Wi-Fi or a direct connection is established through the connection setup process between the terminal apparatus 101 and the communication apparatus 151, communication is possible between the terminal apparatus 101 and the communication apparatus 151 through the established connection. Specifically, for example, the terminal apparatus 101 is able to transmit a print job to the communication apparatus 151 to perform printing or a scan job to the communication apparatus 151 to perform scanning via the established connection. The function of transmitting print jobs and scan jobs to the communication apparatus 151 may be performed by the predetermined app. In the present embodiment, it is possible to operate the communication apparatus 151 in infrastructure connection mode or operate the communication apparatus 151 in direct connection mode through the connection setup process; however, the configuration is not limited thereto. For example, it may be possible to only operate the communication apparatus 151 in infrastructure connection mode through the connection setup process (that is, it is not possible to operate the communication apparatus 151 in direct connection mode).

### Connection Setup Mode

The communication apparatus 151 can operate in connection setup mode. A trigger for the communication apparatus 151 to start operating in connection setup mode may be, for example, the user pressing a button for connection setup mode or may be the communication apparatus 151 being activated (the power is turned on) for the first time after delivery. The button for connection setup mode may be a hardware button provided by the communication apparatus 151 or may be a software button displayed on the display portion 132 of the communication apparatus 151.

When the communication apparatus 151 starts operating in connection setup mode, the communication apparatus 151 enables both Wi-Fi communication and BLE communication. Specifically, the communication apparatus 151 enables the internal AP (access point for connection setup) of the communication apparatus 151, which is dedicated to the connection setup mode, as a Wi-Fi communication enabling process. As a result, the communication apparatus 151 is in a state capable of establishing a direct connection with the terminal apparatus 101 via Wi-Fi. The connection information (SSID and password) for connecting to the AP for connection setup is held in advance in the predetermined app installed on the terminal apparatus 101. In other words, the terminal apparatus 101 is assumed to have connection information in advance for connecting to the AP for connection setup. Therefore, unlike the connection information for the AP that is enabled in direct connection mode, the connection information for connecting to the AP for connection setup cannot be arbitrarily changed by the user. It is applicable that no encryption method is set in the AP for connection setup and no password is used for connection to the AP. In connection setup mode, the communication apparatus 151 may connect to the terminal apparatus 101 using Wi-Fi Direct (WFD) instead of ordinary Wi-Fi. In other words, the communication apparatus 151 may operate as a group owner and receive a setup command from the terminal apparatus 101 through communication via WFD.

### Registration of Communication Apparatus to App

In the present embodiment, the predetermined app can register the communication apparatus 151 by acquiring information about the communication apparatus 151 from the communication apparatus 151.

The information about the communication apparatus 151 includes, for example, the capability information of the communication apparatus 151, the identification information (such as MAC address) of the communication apparatus 151, and the model information of the communication apparatus 151. The capability information of the communication apparatus 151 specifically includes a list of pieces of information about the functions supported by the communication apparatus 151, information about consumables (ink, paper) available for the communication apparatus 151, information indicating the printing method of the communication apparatus 151, and the like. Then, the predetermined app selects one apparatus that is a communication partner of the predetermined app from among one or more communication apparatuses 151 registered in the predetermined app. The communication apparatus 151 currently selected as the apparatus that is a communication partner using the predetermined app is referred to as the selected communication apparatus 151. Selecting the apparatus that is a communication partner using the predetermined app may be performed by accepting a selection of the user from among one or more communication apparatuses 151 registered in the predetermined app, or may be automatically performed according to predetermined criteria by the predetermined app. Changing the apparatus that is a communication partner using the predetermined app may be, for example, performed by accepting a selection of the user from among one or more communication apparatuses 151 registered in the predetermined app. In the present embodiment, the predetermined app transmits various jobs, such as print jobs and scan jobs, to the selected communication apparatus 151. In other words, the selected communication apparatus 151 is an apparatus that is a destination to which various jobs are transmitted.

### Screen for Settings about Location-Based Services

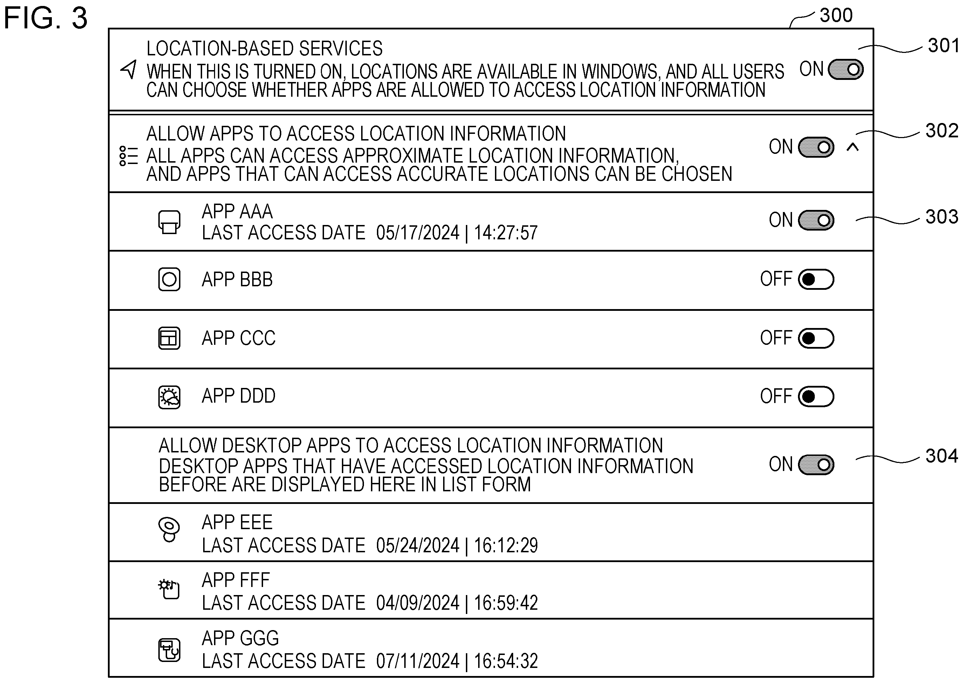

An OS standard setting app of the terminal apparatus 101 can display a settings screen 300 for changing settings about location-based services, as shown in Fig. 3. The settings screen 300 is displayed within the window shown by the OS standard setting app. In the settings screen 300, a region 301 is a region for allowing or not allowing the terminal apparatus 101 to use the location-based services. The region 301 contains a first toggle button. When the first toggle button is operated, the terminal apparatus 101 is allowed or not allowed to use the location-based services. When the terminal apparatus 101 is allowed to use the location-based services, the apps selected in regions 302 to 304 as apps allowed to use the location-based services are able to use the location-based services. In other words, even when the terminal apparatus 101 is allowed to use the location-based services, the apps not selected as apps allowed to use the location-based services are not able to use the location-based services. On the other hand, when the terminal apparatus 101 is not allowed to use the location-based services, all the apps of the terminal apparatus 101 are not able to use the location-based services. When the terminal apparatus 101 is not allowed to use the location-based services, the regions 302 to 304 described below may be grayed out to disable operations on the regions 302 to 304.

The region 302 is a region for allowing or not allowing universal Windows platform (UWP) apps and desktop apps of the terminal apparatus 101 to use the location-based services. The region 302 contains a second toggle button. When the second toggle button is operated, the UWP apps and the desktop apps of the terminal apparatus 101 are allowed or not allowed to use the location-based services. The UWP apps are apps created using a method called UWP, and are apps installed through information downloaded via a store function that supports Windows. The store function that supports Windows specifically refers to, for example, the Microsoft Store. On the other hand, the desktop apps are apps not installed through information downloaded via the store function that supports Windows. Specifically, the desktop apps are apps installed through information downloaded from webpages provided by the vendors of the apps. Alternatively, the desktop apps are apps installed through information downloaded from recording media, such as CDs and USB memories, attached to the terminal apparatus 101. In the present embodiment, the predetermined app is assumed to be a desktop app.

The region 303 is a region for allowing or not allowing the UWP apps of the terminal apparatus 101 to use the location-based services. In the present embodiment, the terminal apparatus 101 is capable of individually allowing or not allowing the UWP apps to use the location-based services. Therefore, in the region 303, a toggle button is assigned to each app. When the toggle button is operated, a corresponding one of the apps is individually allowed or not allowed to use the location-based services. In other words, the app corresponding to the toggle button operated to allow the use of the location-based services in the region 303 is selected as the app allowed to use the location-based services.

The region 304 is a region for allowing or not allowing the desktop apps of the terminal apparatus 101 to use the location-based services. In the present embodiment, the terminal apparatus 101 is not able to individually allow or not allow the desktop apps to use the location-based services. In other words, the terminal apparatus 101 is able to collectively allow or not allow the desktop apps to use the location-based services. Therefore, when the toggle button displayed in the region 304 is operated, all the desktop apps of the terminal apparatus 101 are allowed or not allowed to use the location-based services. In other words, when an operation to allow the use of the location-based services is performed on the toggle button in the region 304, all the desktop apps of the terminal apparatus 101 are selected as apps allowed to use the location-based services. The region 304 may contain a region that shows the desktop apps of the terminal apparatus 101.

In the present embodiment, the region that the user can operate in the settings screen 300 is controlled by the setting app according to the type of account logged in to the terminal apparatus 101. Specifically, when the account logged in to the terminal apparatus 101 is an administrator account, the setting app executes control so that the user is able to operate any of the regions 301 to 304. On the other hand, when the account logged in to the terminal apparatus 101 is a standard user account with lower privileges than the administrator account, the setting app executes control so that the user cannot operate the region 301 and can only operate the regions 302, 303, 304.

In other words, when the user logged in with an administrator account operates the region 301, the user logged in with a standard user account cannot change the settings of the use of the location-based services for the UWP apps of the terminal apparatus 101 and the desktop apps of the terminal apparatus 101 until the terminal apparatus 101 itself is allowed to use the location-based services.

### Challenges to Be Solved by Present Embodiment

As described above, in the present embodiment, when an operation on the settings screen 300 is performed, the predetermined app is able to use the location-based services. In other words, the predetermined app is allowed to use the location-based services. Then, when the OS of the terminal apparatus 101 is a specific OS, the predetermined app is not able to acquire information about the Wi-Fi communication function from the OS unless the predetermined app is allowed to use the location-based services. The information about the Wi-Fi communication function specifically refers to, for example, information about the AP to which the terminal apparatus 101 is currently connected via Wi-Fi. The information about the Wi-Fi communication function is, for example, information about an AP that is emitting a beacon around the terminal apparatus 101 and found through a search made by the terminal apparatus 101 using Wi-Fi. In the present embodiment, the terminal apparatus 101 needs to acquire information about the AP to which the terminal apparatus 101 is currently connected via Wi-Fi and information about a connection setup AP enabled by the communication apparatus 151 operating in connection setup mode from the OS in the connection setup process. Therefore, when the predetermined app is not allowed to use the location-based services, the terminal apparatus 101 is not able to appropriately execute the connection setup process.

Therefore, the predetermined app can determine whether the predetermined app is allowed to use the location-based services and, when the predetermined app is not allowed, prompt the user to allow the predetermined app to use the location-based services. However, in a specific operating system, such as Windows (registered trademark), there is no API prepared for acquiring, from the OS, information directly indicating whether the predetermined app is allowed to use the location-based services. API is the abbreviation of application programming interface. In other words, when the predetermined app operates on a specific OS, there is a challenge that the predetermined app cannot perform a determination using an API to acquire, from the OS, information that directly indicates whether the predetermined app is allowed to use the location-based services. In order to solve such a challenge, in the present embodiment, a determination is performed using a method different from a method using an API to acquire, from the OS, information directly indicating whether the predetermined app is allowed to use the location-based services. Then, based on the determination result, the user is prompted to allow the predetermined app to use the location-based services.

### Process Executed by Predetermined App in Present Embodiment

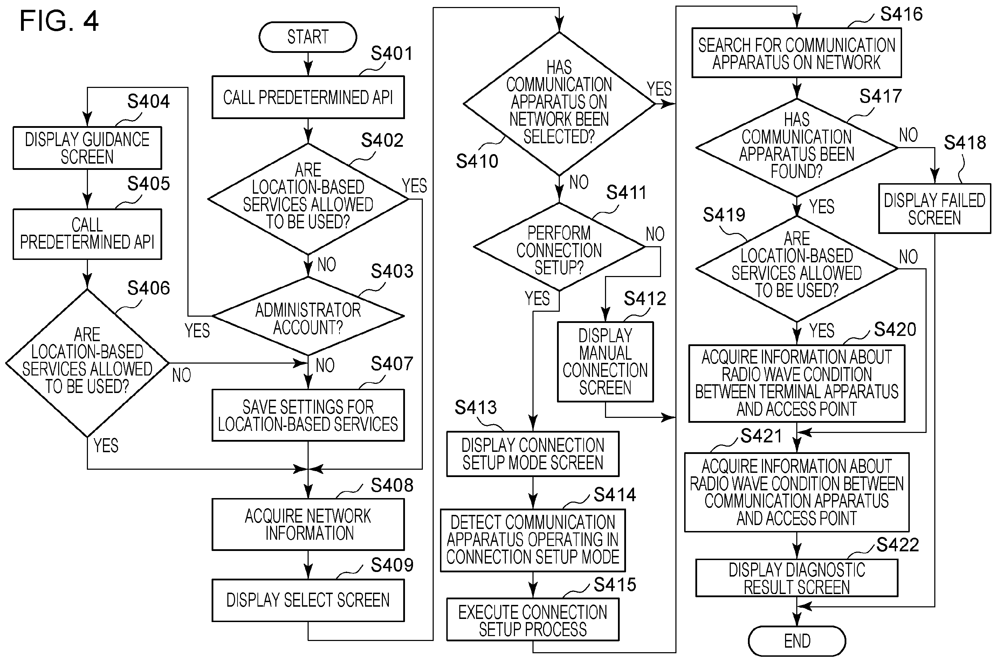

Fig. 4 is a flowchart that shows an example of processes that are executed by the terminal apparatus 101 using the predetermined app in the present embodiment. The processes of the flowchart of Fig. 4 are implemented, for example, when the CPU 103 unfolds the predetermined app stored in the memory, that is, the ROM 104 or the like, to the RAM 105 and executes the predetermined app. The flowchart in Fig. 4 is started based on the fact that an operation for network recovery has been accepted from the user on the screen displayed by the predetermined app.

The flowchart of Fig. 4 may be started in response to the launch of the predetermined app.

The flowchart of Fig. 4 may be started based on failure to perform communication with the communication apparatus 151, attempted by the predetermined app or another app, has failed.

In S401, the CPU 103 calls a predetermined API. In the present embodiment, the predetermined API is an API for acquiring, from the OS, information about the location-based services. In other words, the predetermined API is an API for apps to access information about the location-based services. In the present embodiment, the information about the location-based services is information acquired by the terminal apparatus 101 through the wireless LAN function. This is because, using information acquired by the terminal apparatus 101 through the wireless LAN function, the application program that has acquired the information may be able to identify the location of the terminal apparatus 101 and the location of another apparatus. The information acquired by the terminal apparatus 101 through the wireless LAN function specifically includes, for example, information about a list of wireless networks accessible by the terminal apparatus 101, information about a list of basic service sets (BSSs) of networks accessible by the terminal apparatus 101, and information about the network to which the terminal apparatus 101 is currently connected via Wi-Fi.

When an app that is a source to execute the predetermined API is not allowed to use the location-based services, the app that is a source to call the predetermined API is not notified of a correct value from the OS and an error is notified even when the predetermined API is called. Specifically, the OS notifies an error code, ERROR_ACCESS_DENIED, indicating that access to information about the location-based services has been denied. On the other hand, when the app that is a source to call the predetermined API is allowed to use the location-based services, the app that is a source to call the predetermined API is notified of a correct value from the OS as information about the location-based services when the predetermined API is called. Specifically, the OS notifies the code ERROR_SUCCESS indicating that access to the location-based services is successful, and notifies the correct value of information about the location-based services.

There are multiple predetermined APIs. Specifically, as the predetermined APIs that support the Windows OS, there are WlanGetAvailableNetworkList (hereinafter, referred to as first API), WlanGetAvailableBSSList (hereinafter, referred to as second API), WlanQueryInterface (hereinafter, referred to as third API), and WlanScan (hereinafter, referred to as fourth API).

The first API is an API for acquiring information about a list of wireless networks accessible by the terminal apparatus 101. The wireless networks accessible by the terminal apparatus 101 are networks present around the terminal apparatus 101 and formed by access points that emit beacons based on the Wi-Fi standards. The information acquired by the first API is specifically information indicating the SSIDs of the access points that form the wireless networks accessible by the terminal apparatus 101, the authentication methods and encryption methods of the access points, and the frequency bands used by the access points.

The second API is an API for acquiring information about a list of basic service sets (BSSs) of networks accessible by the terminal apparatus 101. The information acquired by the second API is specifically information indicating the SSIDs of the access points forming the wireless networks accessible by the terminal apparatus 101 and the BSSs of the wireless networks accessible by the terminal apparatus 101. The wireless networks indicated by the information acquired by the first API and the second API are assumed not to be those found through a search (scan) performed based on the execution of the first API or the second API. In other words, the OS is assumed not to perform a new search for wireless networks based on calling of the first API or the second API. The wireless networks indicated by the information acquired through the first API or the second API are, for example, networks found through a search performed by the OS at any timing prior to calling of the first API or the second API or through a search performed based on calling of the fourth API.

The third API is an API for acquiring information about the network to which the terminal apparatus 101 is currently connected via Wi-Fi. The information about the network to which the terminal apparatus 101 is currently connected via Wi-Fi is, in other words, information about the access point forming the network to which the terminal apparatus 101 is currently connected via Wi-Fi. The information acquired by the predetermined API is specifically information indicating the SSID of the access point to which the terminal apparatus 101 is currently connected via Wi-Fi and the authentication method and encryption method of the access point.

The fourth API is an API for causing the OS to perform a search for wireless networks accessible by the terminal apparatus 101.

In the present embodiment, it is assumed that, in S401, the third API is called among the first to fourth APIs; however, the configuration is not limited to this configuration. Any API may be called as long as the API is the predetermined API. The predetermined API is not limited to the configuration including only the first to fourth APIs. The predetermined API may include other types of APIs as long as the APIs are used for acquiring, from the OS, information about the location-based services.

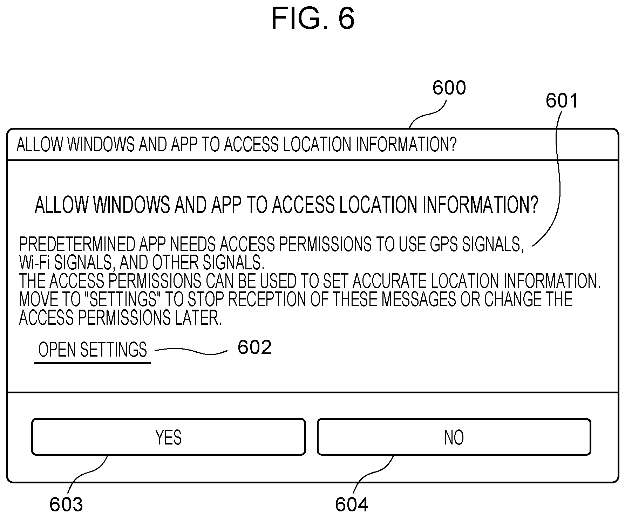

When the predetermined API is called by the predetermined app in S401, the OS executes the process based on calling of the predetermined API. Specifically, initially, the OS determines whether calling of the predetermined API by the predetermined app is the first time and whether the predetermined app is allowed to use the location-based services. When the OS determines that calling of the predetermined API by the predetermined app is the first time and the predetermined app is allowed to use the location-based services, the OS displays an inquiry screen to ask the user whether to allow the predetermined app to use the location-based services. The inquiry screen 600 shown in Fig. 6 is an example of an inquiry screen displayed here. The inquiry screen 600 includes a region 601 that displays a message for asking whether to allow the predetermined app to use the location-based services and a message indicating that the predetermined app needs permissions to use the location-based services. The inquiry screen 600 includes a button 602 for displaying the settings screen 300. When the button 602 is operated by the user, the OS launches the OS standard setting app and causes the OS standard setting app to show the settings screen 300. The inquiry screen 600 includes a button 603 for allowing the predetermined app to use the location-based services and a button 604 for not allowing the predetermined app to use the location-based services. When the button 603 is operated by the user, the OS allows the terminal apparatus 101 to use the location-based services and allows the predetermined app to use the location-based services. On the other hand, when the button 604 is operated by the user, the OS maintains a state where the predetermined app is not allowed to use the location-based services.

After the button 603 or the button 604 is operated and the setting related to whether to allow the predetermined app to use the location-based services is changed or maintained, the OS determines whether the predetermined app is allowed to use the location-based services. When the OS determines that calling of the predetermined API by the predetermined app is not the first time, the OS does not display the inquiry screen 600 and determines whether the predetermined app is allowed to use the location-based services. Then, when the predetermined app is allowed to use the location-based services, the OS notifies the predetermined app of a code ERROR_SUCCESS corresponding to the fact that calling of the predetermined API is successful and notifies the predetermined app of the correct value of information about the location-based services. On the other hand, when the predetermined app is allowed to use the location-based services, the OS notifies the predetermined app of an error code ERROR_ACCESS_DENIED corresponding to failure to access information by the predetermined API, while not notifying the predetermined app of the correct value of information about the location-based services.

In S402, the CPU 103 determines whether the predetermined app is allowed to use the location-based services. In this process, specifically, for example, the CPU 103 determines whether a code corresponding to a successful access of the predetermined API to information has been notified as a result of calling of the predetermined API. This determination is equivalent to a process of determining whether access to information about the location-based services is successful through calling of the predetermined API. When the predetermined app is not allowed to use the location-based services and the determination is negative based on a notification, from the OS, of an error code corresponding to failure to access information by the predetermined API as a result of calling of the predetermined API, the CPU 103 proceeds to S403. On the other hand, when the predetermined app is allowed to use the location-based services and the determination is affirmative based on a notification of the correct value from the OS as a result of calling of the predetermined API, the CPU 103 proceeds to S408.

In S403, the CPU 103 identifies the type of user account currently logged in to the terminal apparatus 101 and determines whether the identified account is an administrator account (or a standard user account). When the determination is affirmative, the CPU 103 proceeds to S404; whereas, when the determination is negative, the CPU 103 proceeds to S407.

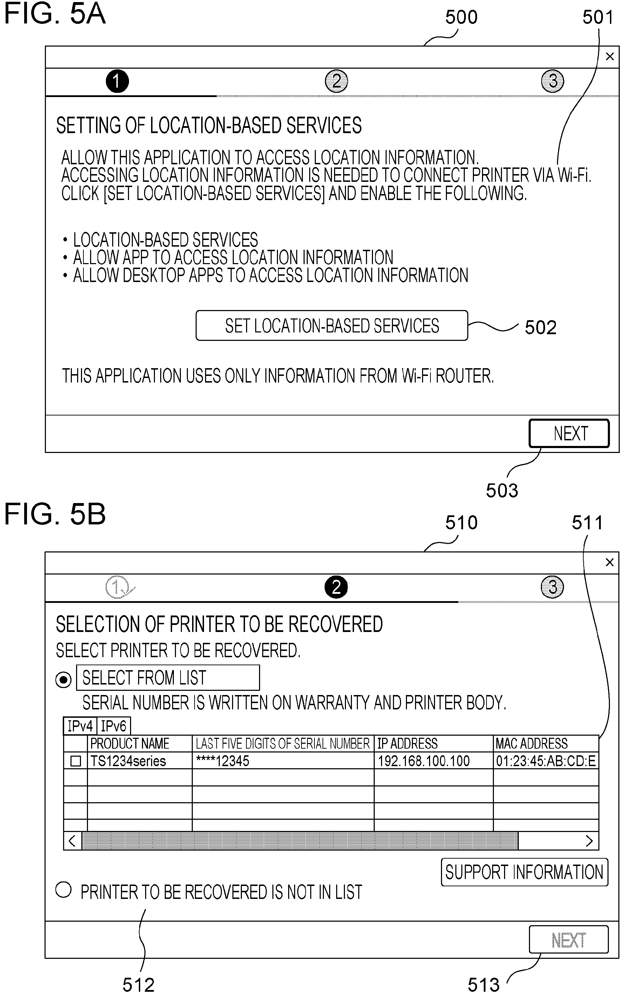

In S404, the CPU 103 executes a display process to display a guidance screen for prompting the user to allow the predetermined app to use the location-based services. A guidance screen 500 shown in Fig. 5A is an example of the guidance screen displayed in S404. The guidance screen 500 contains a region 501 that displays a message for prompting the user to allow the predetermined app to use the location-based services and a message indicating an operation for allowing the predetermined app to use the location-based services. The guidance screen 500 may contain a message indicating information acquired by the predetermined app as information about the location-based services. In other words, in the present embodiment, the guidance screen 500 may contain, for example, a message indicating that the predetermined app acquires information about an AP (Wi-Fi router) as the information about the location-based services. The guidance screen 500 contains a button 502 for displaying the settings screen 300. When the button 502 is operated by the user, the CPU 103 launches the OS standard setting app and causes the OS standard setting app to display the settings screen 300. Even when the button 502 is operated and the settings screen 300 is displayed, the display of the guidance screen 500 is maintained. Therefore, the user can operate the button 503 contained in the guidance screen 500 after allowing the predetermined app to use the location-based services on the settings screen 300. When the button 503 is operated, the CPU 103 proceeds to S405.

In S405, the CPU 103 calls the predetermined API again as in the case of S401.

Then, in S406, the CPU 103 determines whether the predetermined app is allowed to use the location-based services as in the case of S402. When the predetermined app is not allowed to use the location-based services and the determination is negative based on a notification of an error code from the OS as a result of calling of the predetermined API, the CPU 103 proceeds to S407. On the other hand, when the predetermined app is allowed to use the location-based services and the determination is affirmative based on a notification of the correct value from the OS as a result of calling of the predetermined API, the CPU 103 proceeds to S408.

In S407, the CPU 103 saves the details of current settings about permissions for the predetermined app to use the location-based services in the memory. In other words, the CPU 103 saves, in the memory, information indicating settings corresponding to the fact that the predetermined app is not allowed to use the location-based services. After that, the CPU 103 proceeds to S408.

In S408, the CPU 103 acquires information about the network to which the terminal apparatus 101 is currently connected via Wi-Fi. Specifically, in S408, the CPU 103 calls the third API. When the predetermined app is allowed to use the location-based services, acquisition of information about the network to which the terminal apparatus 101 is currently connected via Wi-Fi succeeds by calling of this API. Therefore, the network to which the terminal apparatus 101 is currently connected via Wi-Fi is, in other words, the network to which the terminal apparatus 101 is connected via Wi-Fi when the third API is called.

When the predetermined app is not allowed to use the location-based services, acquisition of information about the network to which the terminal apparatus 101 is currently connected via Wi-Fi fails even when this API is called. When the terminal apparatus 101 is currently not connected to any network via Wi-Fi, calling of API succeeds; however, information about the network to which the terminal apparatus 101 is currently connected via Wi-Fi is not acquired.

When acquisition of information about an AP is successful through calling of API in S401, the API for acquiring information about the network to which the terminal apparatus 101 is currently connected via Wi-Fi does not need to be called in S408. Then, the information acquired through calling of API in S401 may be used in the following process. In S408, the CPU 103 further acquires information that can be acquired even when the predetermined app is not allowed to use the location-based services. Specifically, the CPU 103 acquires information about the Wi-Fi connection (wireless LAN connection) of the terminal apparatus 101 and information about the wired LAN connection of the terminal apparatus 101 as information that can be acquired even when the predetermined app is not allowed to use the location-based services. The information about the Wi-Fi connection of the terminal apparatus 101 and information about the wired LAN connection of the terminal apparatus 101 specifically include, for example, information indicating whether IPv4 or IPv6 is enabled and information indicating IP addresses, MAC addresses, and channels being used for connection. When the terminal apparatus 101 has not established a Wi-Fi connection, information about the Wi-Fi connection of the terminal apparatus 101 is not acquired. When the terminal apparatus 101 has not established a wired LAN connection, information about the wired LAN connection of the terminal apparatus 101 is not acquired. Therefore, in this process, the network to which the terminal apparatus 101 is connected is identified based on whether the information has been acquired. When information about the network to which the terminal apparatus 101 is currently connected via Wi-Fi has been acquired through calling of the predetermined API, acquisition of a wireless profile corresponding to the network to which the terminal apparatus 101 is currently connected via Wi-Fi may be performed.

The wireless profile is information managed by the OS, and is information about the networks to which the terminal apparatus 101 has been connected before. Then, the wireless profile includes a password for connection to the network. Therefore, the CPU 103 can identify the password of the network to which the terminal apparatus 101 is currently connected via Wi-Fi by acquiring the wireless profile without accepting input of the password on the predetermined app from the user.

The process of acquiring a wireless profile that includes a password needs an administrator privilege.

A process that needs an administrator privilege is a process executable based on the fact that privilege escalation for the app is executed as a result of permissions obtained from the user. In this embodiment, the process of allowing the app to execute processes that need an administrator privilege is referred to as privilege escalation. Permissions from the user are obtained, for example, by an input operation indicating that the user allows the execution of processes that need an administrator privilege on the screen displayed by a user account control (hereinafter, referred to as UAC) function. When the user account logged in to the terminal apparatus 101 is an administrator account, the input operation can be executed without inputting a password on the screen displayed by the UAC function. Then, when the user account logged in to the terminal apparatus 101 is not an administrator account, the input operation can be performed by inputting the password of the administrator account on the screen displayed by the UAC function. Then, in the present embodiment, since the predetermined app is a desktop app, when the privilege escalation has been executed on the predetermined app, the predetermined app can acquire the wireless profile that includes the password. Therefore, in the present embodiment, it is assumed that the privilege escalation has been executed in advance for the predetermined app to acquire the wireless profile that includes the password. When the privilege escalation has not been executed for the predetermined app, a screen for executing the privilege escalation may be displayed by the UAC function. When the screen is displayed but the privilege escalation is not executed because permissions from the user are not obtained and, therefore, the password is not acquired by the predetermined app by executing the predetermined API, the CPU 103 may display an input screen for accepting the input of a password using the predetermined app. In the connection setup process, the password input on the input screen may be used instead of the password acquired through the execution of the predetermined API.

In S408, the CPU 103 may acquire not only the wireless profile corresponding to the network to which the terminal apparatus 101 is currently connected via Wi-Fi but also other wireless profiles. Specifically, for example, the CPU 103 may acquire wireless profiles corresponding to wireless networks included in a list of wireless networks accessible by the terminal apparatus 101, as indicated by the information acquired from the OS through calling of the first API and the second API.

A method of acquiring wireless profiles is not limited to the above-described configuration. For example, the CPU 103 may request all wireless profiles managed and stored by the terminal apparatus 101 from the OS. Then, from the multiple wireless profiles obtained in this way, the wireless profile corresponding to the network to which the terminal apparatus 101 is currently connected via Wi-Fi may be identified. Similarly, from the multiple wireless profiles obtained in this way, the wireless profiles corresponding to the wireless networks included in the list of wireless networks accessible by the terminal apparatus 101 may be identified.

The information acquired in S408 is not limited to the above-described configuration. Only one of the above-described pieces of information may be acquired, or other information may be acquired. Specifically, for example, it is applicable that a wireless profile is not acquired or the SSID included in a wireless profile is acquired but the password is not acquired. Therefore, for example, the information acquired in S401 and the information acquired in S408 may be different from each other because of the condition that the API called in S401 and the API called in S408 are different from each other.

In S409, the CPU 103 searches for the communication apparatus 151 that supports the predetermined app on the network to which the terminal apparatus 101, identified in S408, is connected. The communication apparatus 151 that supports the predetermined app is, for example, a communication apparatus 151 provided by the same vendor as the vendor of the predetermined app. Then, the CPU 103 displays a selection screen for selecting one from among one or more communication apparatuses 151 found by this search. A selection screen 510 shown in Fig. 5B is an example of the selection screen displayed in S409. The selection screen 510 contains a region 511 that is a region showing one or more communication apparatuses 151 found by the above search.

In the region 511, information indicating one or more communication apparatuses 151 that have been not found by the above search but have been connected to by the terminal apparatus 101 before may be displayed. The information displayed in the region 511 specifically includes, for example, the product name, part of the serial number, IP address, and MAC address of the communication apparatus 151. The user performs an operation on the region 511 to select one communication apparatus 151 from among one or more communication apparatuses 151 found by the above search and one or more communication apparatuses 151 that have not been found by the above search but have been connected to the terminal apparatus 101 before. The selection screen 510 contains a region 512 for the user to operate when there is no communication apparatus 151 desired by the user as a recovery target among the one or more communication apparatuses 151 displayed in the region 511. When any of the communication apparatuses 151 is selected by an operation to the region 511, or when the region 512 is selected, the region 513 is enabled to be able to accept user operation. When the region 513 is operated, the CPU 103 proceeds to S410.

In S410, the CPU 103 determines whether the communication apparatus 151 found on the network to which the terminal apparatus 101 is connected has been selected on the selection screen 510. When the communication apparatus 151 not found by the above search but the terminal apparatus 101 has been connected to before is selected, or when the region 512 is selected, the result of this determination is negative.

When the CPU 103 makes an affirmative determination, the CPU 103 proceeds to S416; whereas, when the CPU 103 makes a negative determination, the CPU 103 proceeds to S411.

In S411, the CPU 103 determines whether to execute the connection setup process. Specifically, in S411, the CPU 103 determines whether the terminal apparatus 101 is currently connected to the network via Wi-Fi. The CPU 103 determines whether the function for using IPv4 is enabled on the terminal apparatus 101. These determinations are performed using the information acquired in S408. Then, the case where both determination results are affirmative corresponds to the case where it is determined to execute the connection setup process. Then, the case where at least one determination result is negative corresponds to the case where it is determined not to execute the connection setup process. When the CPU 103 makes an affirmative determination, the CPU 103 proceeds to S413; whereas, when the CPU 103 makes a negative determination, the CPU 103 proceeds to S412.

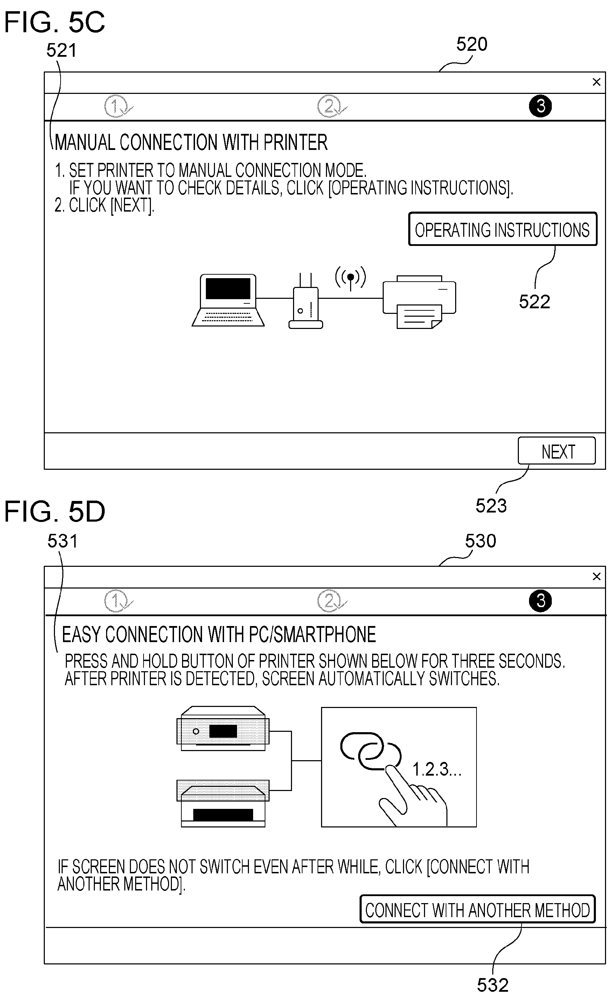

In S412, the CPU 103 displays a guidance screen about manual connection as a process for manual connection. In the present embodiment, manual connection refers to a state where the communication apparatus 151 connects with an access point without receiving setup information from the terminal apparatus 101. Specifically, in manual connection, the communication apparatus 151 searches for surrounding access points based on an operation on the communication apparatus 151, displays a list of found access points, and connects to the access point selected from the list. A guidance screen 520 shown in Fig. 5C is an example of the guidance screen displayed in S412. The guidance screen 520 contains a region 521 that is a region including a message indicating an operating method for manual connection with the communication apparatus 151. The guidance screen 520 contains a region 522 that is a button for displaying a webpage that shows the details of the operating method for performing manual connection with the communication apparatus 151. When the region 522 is operated, the CPU 103 launches a web browser and causes the web browser to display a webpage that shows the details of the operating method for manual connection with the communication apparatus 151.

The details of the operating method for manual connection with the communication apparatus 151 may be displayed on a screen that is displayed by the predetermined app, such as the guidance screen 520, instead of a web browser. When a region 523 is operated, the CPU 103 proceeds to S416.

In S413, the CPU 103 displays a guidance screen for operating the communication apparatus 151 in connection setup mode as a process for executing the connection setup process. A guidance screen 530 shown in Fig. 5D is an example of the guidance screen displayed in S413. The guidance screen 530 contains a region 531 that is a region including a message indicating an operating method for operating the communication apparatus 151 in connection setup mode. The guidance screen 530 may also contain a region 532 that is a button for displaying a guidance screen related to manual connection. When the region 532 is operated, the CPU 103 proceeds to S412 and displays a guidance screen related to manual connection.

In S414, the CPU 103 detects the communication apparatus 151 present around the terminal apparatus 101 and operating in connection setup mode. Specifically, in S414, the CPU 103 calls the fourth API to cause the OS to search for wireless networks accessible by the terminal apparatus 101. After that, the CPU 103 calls the first API to acquire, from the OS, information about a list of wireless networks accessible by the terminal apparatus 101. Then, the network formed by the communication apparatus 151 operating in connection setup mode is detected from a list of wireless networks accessible by the terminal apparatus 101. The network formed by the communication apparatus 151 operating in connection setup mode is, in other words, a network formed by an access point enabled by the communication apparatus 151 operating in connection setup mode. The second API may be called instead of the first API. When any of the communication apparatuses 151 has been selected on the selection screen 510, the CPU 103 operates in connection setup mode and detects the communication apparatus 151 that matches the communication apparatus 151 selected on the selection screen 510. When the detection of the communication apparatus 151 operating in connection setup mode is successful, the CPU 103 proceeds to S415.

In S415, the CPU 103 executes the connection setup process for the communication apparatus 151. The details of this process will be described later.

In S416, the CPU 103 searches for the communication apparatus 151 on the network to which the terminal apparatus 101 is currently connected. When any of the communication apparatuses 151 has been selected on the selection screen 510, the CPU 103 detects the communication apparatus 151 that matches the communication apparatus 151 selected on the selection screen 510. When the connection setup process has been executed in S415, the CPU 103 searches for the communication apparatus 151 for which the connection setup process is executed. When no communication apparatus 151 is present on the network to which the terminal apparatus 101 is currently connected, the communication apparatus 151 is not found by this search.

In S417, the CPU 103 determines whether the communication apparatus 151 has been found by the search performed in S416. When the determination is affirmative, the CPU 103 proceeds to S419; whereas, when the determination is negative, the CPU 103 proceeds to S418.

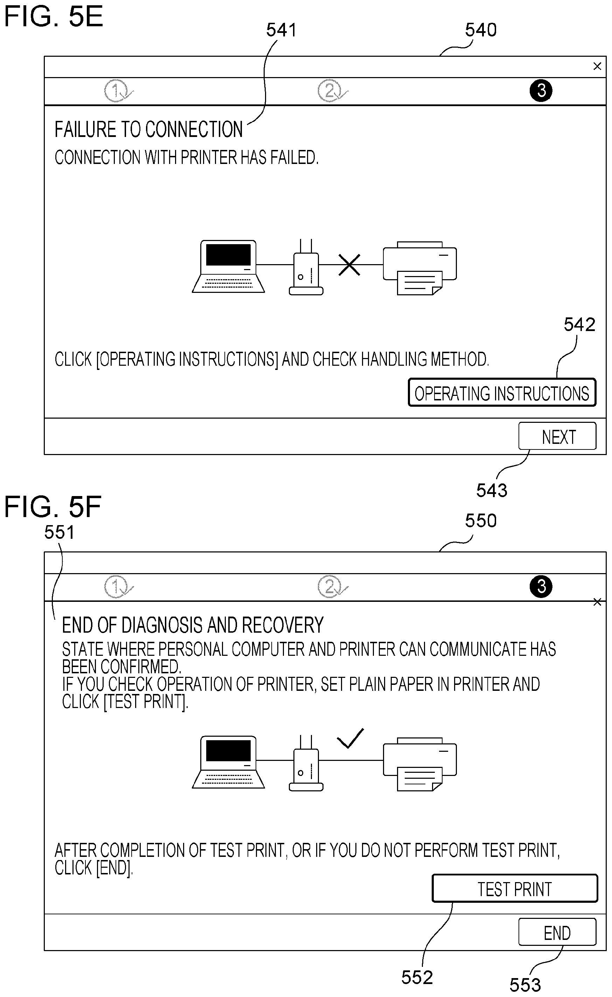

In S418, the CPU 103 displays a failure screen indicating failure to connect with the communication apparatus 151, as a diagnostic result. The failure to connect with the communication apparatus 151 means, in other words, that communication with the communication apparatus 151 cannot be performed because the communication apparatus 151 has not been found by the search performed in S416. A failure screen 540 shown in Fig. 5E is an example of the failure screen displayed in S418. The failure screen 540 contains a region 541 that displays a message indicating failure to connect with the communication apparatus 151. The failure screen 540 contains a region 542 that is a button for checking the status of the network of the communication apparatus 151. When the region 542 is operated, the CPU 103 launches a web browser and causes the web browser to display a webpage that shows the details of a method for checking the status of the network of the communication apparatus 151. The method for checking the status of the network of the communication apparatus 151 includes, for example, printing information that indicates the status of the network of the communication apparatus 151. The webpage may further provide a method for resolving network troubles by referencing printed information. The details of the method for checking the status of the network of the communication apparatus 151 may be displayed on a screen shown by the predetermined app, such as the failure screen 540, instead of a web browser. When a region 543 is operated, the CPU 103 ends the process of this flowchart.

In S419, the CPU 103 determines whether the predetermined app is allowed to use the location-based services. This determination is made based on information that indicates the current setting details about the permissions to use the location-based services for the predetermined app, saved in the memory. In other words, the predetermined API is not called in this determination. When information indicating the setting that the predetermined app is not allowed to use the location-based services is saved in the memory in S407, the determination is negative. Then, when the information has not been saved in the memory because of the fact that S407 has not been executed, the determination is affirmative. The configuration is not limited thereto. The predetermined API may be called as in the case of S401, and a determination based on the result of calling of the predetermined API may be performed as in the case of S402. When the determination is affirmative in this determination, the CPU 103 proceeds to S420; whereas, when the determination is negative, the CPU 103 proceeds to S421.

In S420, the CPU 103 acquires information about the radio wave condition between the terminal apparatus 101 and the access point to which the terminal apparatus 101 is currently connected (radio wave condition information of the terminal apparatus 101). The radio wave condition information of the terminal apparatus 101 is information that cannot be acquired by the predetermined app when the predetermined app is not allowed to use the location-based services, and is information that is acquired by the predetermined API. The radio wave condition information of the terminal apparatus 101 includes, for example, information about the radio wave strength in communication between the terminal apparatus 101 and the access point. The information about the radio wave strength is specifically information about the reception strength of radio waves received by the terminal apparatus 101 from the access point. In S420, the CPU 103 acquires, from the OS, information about the radio wave condition between the terminal apparatus 101 and each wireless network accessible by the terminal apparatus 101 by calling the first API. In other words, the CPU 103 acquires multiple pieces of radio wave condition information from the OS. Then, the CPU 103 realizes this process by extracting the radio wave condition information corresponding to the network to which the terminal apparatus 101 is currently connected, from the acquired multiple pieces of radio wave condition information. The radio wave condition information of the terminal apparatus 101 can also be acquired by the second API or the third API, so those APIs may be called instead of the first API.

In S421, the CPU 103 acquires, from the communication apparatus 151, information about the radio wave condition between the communication apparatus 151 and the access point to which the communication apparatus 151 is currently connected (the radio wave condition information of the communication apparatus 151). The radio wave condition information of the communication apparatus 151 includes, for example, information about the radio wave strength in communication between the communication apparatus 151 and the access point. The information about the radio wave strength is specifically information about the reception strength of radio waves received by the communication apparatus 151 from the access point. The radio wave condition information includes, for example, information about radio noise around the communication apparatus 151. In the present embodiment, the information about the radio noise is assumed to be the value of a signal to noise ratio (SNR) measured by the communication apparatus 151. The radio wave condition information of the communication apparatus 151 is information acquired from the communication apparatus 151 through communication with the communication apparatus 151, so the predetermined app can acquire the radio wave condition information of the communication apparatus 151 without calling the predetermined API.

In S422, the CPU 103 displays a diagnostic result screen based on the radio wave condition information of the terminal apparatus 101, acquired in S420, and the radio wave condition information of the communication apparatus 151, acquired in S421. A diagnostic result screen 550 shown in Fig. 5F is an example of the diagnostic result screen displayed in S422. The diagnostic result screen 550 is a diagnostic result screen in a case where both the radio wave strength in communication between the terminal apparatus 101 and the access point and the radio wave strength in communication between the communication apparatus 151 and the access point exceed a threshold, and both the radio wave condition of the terminal apparatus 101 and the radio wave condition of the communication apparatus 151 are good. The diagnostic result screen 550 contains a region 551 that displays a message based on the radio wave condition of the terminal apparatus 101 and the radio wave condition of the communication apparatus 151. When both the radio wave condition of the terminal apparatus 101 and the radio wave condition of the communication apparatus 151 are good, the region 551 displays a message indicating that the terminal apparatus 101 and the communication apparatus 151 can communicate with each other. When neither the radio wave strength in communication between the terminal apparatus 101 and the access point nor the radio wave strength in communication between the communication apparatus 151 and the access point exceeds a threshold, the region 551 displays a message indicating that the terminal apparatus 101 and the communication apparatus 151 are not able to communicate or that the radio wave strength is weak. The diagnostic result screen 550 contains a button 552 for causing the communication apparatus 151 to perform a test print. When the button 552 is operated, the CPU 103 transmits a print job for performing a test print to the communication apparatus 151 to cause the communication apparatus 151 to perform a test print. When a region 553 is operated, the CPU 103 ends the process of this flowchart.

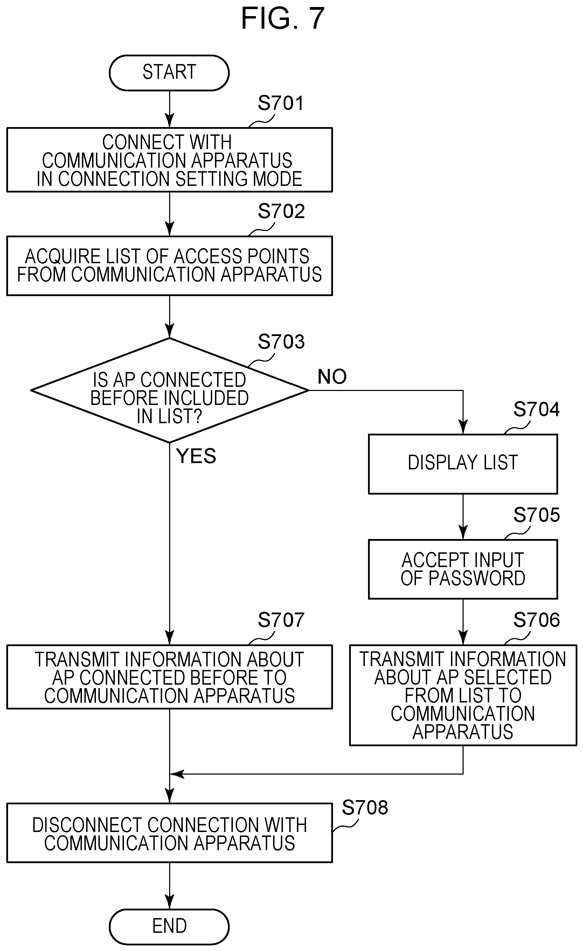

Fig. 7 is a flowchart that shows an example of the connection setup process executed by the terminal apparatus 101 using the predetermined app in the present embodiment. The processes of the flowchart of Fig. 7 are implemented, for example, when the CPU 103 unfolds a predetermined app stored in the memory, that is, the ROM 104 or the like, to the RAM 105 and executes the predetermined app. The flowchart of Fig. 7 is a flowchart that shows the details of the connection setup process executed in S415.

In S701, the CPU 103 disconnects Wi-Fi connection between the terminal apparatus 101 and the network, and establishes a Wi-Fi connection between the communication apparatus 151, operating in connection setup mode and detected in S414, and the terminal apparatus 101.

In S702, the CPU 103 acquires, from the communication apparatus 151, a list of networks found by the search performed by the communication apparatus 151 and accessible by the communication apparatus 151.

In S703, the CPU 103 determines whether the network to which the terminal apparatus 101 was connected before connecting to the communication apparatus 151 operating in connection setup mode is included in the received list. The network to which the terminal apparatus 101 was connected before connecting to the communication apparatus 151 operating in connection setup mode is a network to which the terminal apparatus 101 was connected when the terminal apparatus 101 accepted an operation for network recovery from the user. Information about the network has been acquired in S408, so this determination is performed based on the information acquired in S408. When the determination is affirmative in this determination, the CPU 103 proceeds to S707; whereas, when the determination is negative, the CPU 103 proceeds to S704.

In S704, the CPU 103 displays the list received from the communication apparatus 151 and accepts selection of any one of the networks from the list from the user.

In S705, the CPU 103 displays an input screen using the predetermined app for accepting the input of a password for connection to the network selected in S704. When the password has been acquired through the acquisition of the wireless profile in S408, this process may be omitted.

In S706, the CPU 103 transmits information for connection to the network selected in S704 as infrastructure setup information. The infrastructure setup information transmitted here includes the password input on the input screen displayed in S705 and the information (such as SSID) for identifying the network selected in S704. When the password has been acquired through the acquisition of the wireless profile in S408, the password acquired through the acquisition of the wireless profile may be included in the infrastructure setup information. The infrastructure setup information transmitted here may include information indicating the authentication method, the encryption method, and the frequency band, used by the network selected in S704. When the infrastructure setup information is transmitted in S706, the communication apparatus 151 connects to the network selected in S704 using the infrastructure setup information. After that, the CPU 103 proceeds to S708.

In S707, the CPU 103 transmits information for connecting to the network to which the terminal apparatus 101 was connected before connecting to the communication apparatus 151 as infrastructure setup information. The infrastructure setup information transmitted here includes the password acquired in S408 and information (such as SSID) for identifying the network to which the terminal apparatus 101 was connected before connecting to the communication apparatus 151. The infrastructure setup information transmitted here may include information indicating the authentication method, the encryption method, and the frequency band, used by the network to which the terminal apparatus 101 was connected before connecting to the communication apparatus 151. When the infrastructure setup information is transmitted in S707, the communication apparatus 151 connects to the network to which the terminal apparatus 101 was connected before connecting to the communication apparatus 151 using the infrastructure setup information.

In S708, the CPU 103 disconnects the Wi-Fi connection between the terminal apparatus 101 and the communication apparatus 151. When the Wi-Fi connection is disconnected, a reconnection function provided by the OS of the terminal apparatus 101 attempts to establish a connection between the terminal apparatus 101 and the network that can be connected using a wireless profile held by the terminal apparatus 101. Here, it is assumed that the reconnection function attempts to establish a connection between the terminal apparatus 101 and the network to which the terminal apparatus 101 was connected before connecting to the communication apparatus 151. As a result, the terminal apparatus 101 reconnects to the network to which the terminal apparatus 101 was connected before connecting to the communication apparatus 151. Establishment of a connection between the terminal apparatus 101 and the network to which the terminal apparatus 101 was connected before connecting to the communication apparatus 151 may be performed not by the reconnection function provided by the OS of the terminal apparatus 101 but by the predetermined app instructing the OS. After that, the CPU 103 ends the process of this flowchart and proceeds to S416.

With this configuration, it is possible to appropriately determine whether the predetermined app is allowed to use the location-based services. Then, it is possible to appropriately execute the process according to the determination result of whether the predetermined app is allowed to use the location-based services.

The configuration in which the guidance screen 500 is displayed by the predetermined app based on the notification of a predetermined error as a result of the execution of the predetermined API has been described above. Alternatively, the predetermined app may also display the guidance screen 500 depending on other causes. Specifically, for example, the predetermined app may display the guidance screen 500 based on the selection of a predetermined menu item from a menu displayed when a "Help" tab displayed by the predetermined app is operated. The predetermined app does not execute the predetermined API based on the selection of the predetermined menu item. In other words, when the predetermined menu item is selected, the guidance screen 500 is displayed by the predetermined app not based on the notification of the predetermined error as a result of the execution of the predetermined API. However, the configuration is not limited thereto. The predetermined app may execute the predetermined API when the predetermined menu item is selected, and may display the guidance screen 500 based on the notification of the predetermined error as a result of the execution of the predetermined API.

The configuration in which the predetermined app is an app for network recovery has been described above; however, the configuration is not limited thereto. The predetermined app may be an app for a connection setup process, which does not execute a process for network recovery, such as a process of displaying a diagnostic result screen, and executes a connection setup process. The predetermined app may have other functions other than the connection setup process. Examples of the other functions specifically include a function to transmit a print job to the communication apparatus 151 to execute printing (print job transmission function) and a function to transmit a scan job to the communication apparatus 151 to execute scanning (scan job transmission function).

### Second Embodiment

The configuration in which the predetermined app is a desktop app has been described above; however, the configuration is not limited thereto. The predetermined app may also be a UWP app. In the present embodiment, a configuration in which the predetermined app is a UWP app will be described.

UWP apps have restrictions that prohibit the execution of processes that need an administrator privilege. In the present embodiment, the terminal apparatus 101 has a UWP app that is the predetermined app and a desktop app that is an app different from the predetermined app, and is assumed to execute processes by linking the apps together. In the following, the UWP app that is the predetermined app is referred to as App A, and the desktop app that is an app different from the predetermined app is referred to as App B. In the present embodiment, App A is installed on the terminal apparatus 101 from an external source using the store function provided by the vendor of the OS, and App B is installed on the terminal apparatus 101 from an external source using a webpage provided by the vendor of App B. App B can be downloaded and installed on the terminal apparatus 101 based on instructions from App A.

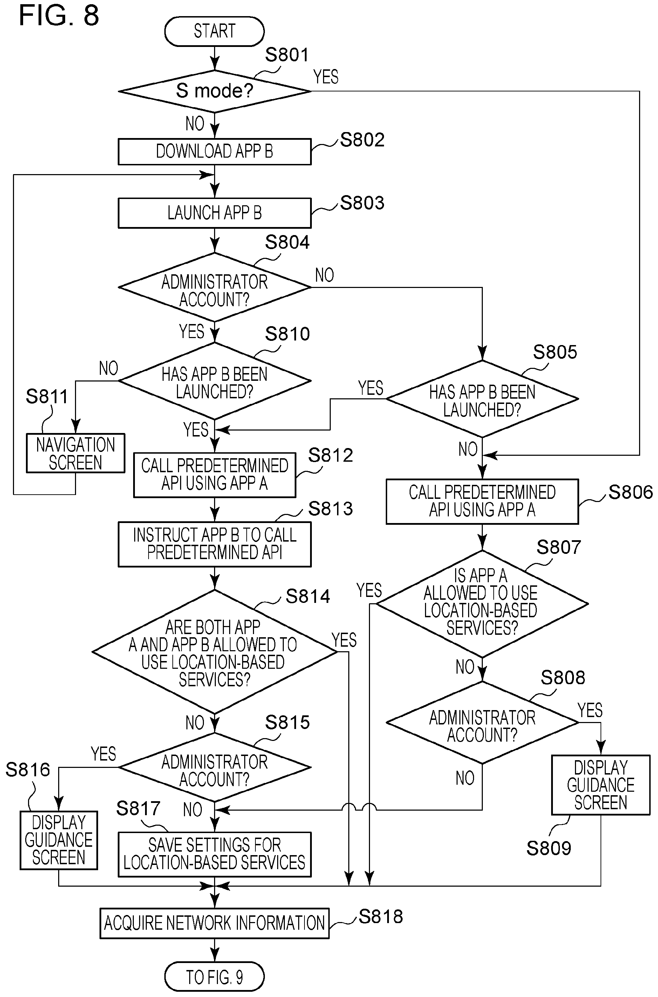

Fig. 8 is a flowchart that shows an example of processes that are executed by the terminal apparatus 101 using the predetermined app in the present embodiment. The processes of the flowchart of Fig. 8 are implemented, for example, when the CPU 103 unfolds a predetermined app stored in the memory, that is, the ROM 104 or the like, to the RAM 105 and executes the predetermined app. The flowchart of Fig. 8 is started based on the fact that an operation for connection setup process has been accepted from the user on a screen displayed by App A. The flowchart of Fig. 8 may be started in response to the launch of App A.

In S801, the CPU 103 determines whether the OS operating on the terminal apparatus 101 is an S-mode OS. The S mode is a mode that restricts some functions to enhance the security of the terminal apparatus 101. On the S-mode OS, it is possible to run UWP apps, but it is not possible to run desktop apps. In other words, when the OS operating on the terminal apparatus 101 is an S-mode OS, it is possible to run App A, but it is not possible to run App B. When the determination is affirmative in this determination, the CPU 103 proceeds to S806 and proceeds to a flow that does not execute various processes (S802, S803, S811) for running App B. On the other hand, when the determination is negative, the CPU 103 proceeds to S802.

In S802, the CPU 103 downloads and installs App B based on instructions from App A.

In S803, the CPU 103 attempts to launch App B. When the launch of App B is attempted, a screen for privilege escalation is displayed by the OS using the UAC function. At this time, as described above, when the currently logged-in user account on the terminal apparatus 101 is an administrator account, the input of a password is not requested as an operation for privilege escalation. However, when the currently logged-in user account on the terminal apparatus 101 is not an administrator account, the input of a password is requested as an operation for privilege escalation. In the screen for privilege escalation, when the password input for privilege escalation is incorrect, an error is notified, and the input of a password is requested again. When an operation indicating that App B is not allowed to execute processes that need an administrator privilege has been performed, App B is not launched. When an operation indicating that App B is allowed to execute processes that need an administrator privilege has been performed on the screen for privilege escalation, or when the password input for privilege escalation is correct, App B is launched.

In S804, the CPU 103 identifies the type of user account currently logged in to the terminal apparatus 101 and determines whether the identified account is an administrator account (or a standard user account). When the determination is affirmative in this determination, the CPU 103 proceeds to S810; whereas, when the determination is negative, the CPU 103 proceeds to S805.

In S805, the CPU 103 determines whether App B has been launched through the process of S803. When the determination is affirmative in this determination, the CPU 103 proceeds to S812; whereas, when the determination is negative, the CPU 103 proceeds to S806 without displaying a navigation screen that navigates the user to allow App B to execute processes that need an administrator privilege.

In S806, the CPU 103 calls the predetermined API with App A. In the present embodiment, it is assumed that the first API among the first to fourth APIs is called in S806; however, the configuration is not limited thereto. Any API may be called as long as the API is a predetermined API, and specifically, for example, the third API may be called. The process that the OS executes when the predetermined API is called is as described in the description of S401. In this process, the predetermined API is called by App A, so information notified from the OS varies depending on whether App A is allowed to use the location-based services.

In S807, the CPU 103 determines whether App A is allowed to use the location-based services. This process is similar to that of S402. In other words, the CPU 103 determines whether a code corresponding to a successful access of the predetermined API to information has been notified as a result of calling of the predetermined API. When the determination is affirmative in this determination, the CPU 103 proceeds to S818; whereas, when the determination is negative, the CPU 103 proceeds to S808.

In S808, the CPU 103 identifies the type of user account currently logged in to the terminal apparatus 101 and determines whether the identified account is an administrator account (or a standard user account). This process is similar to that of S804. When the determination is affirmative in this determination, the CPU 103 proceeds to S809; whereas, when the determination is negative, the CPU 103 proceeds to S817.

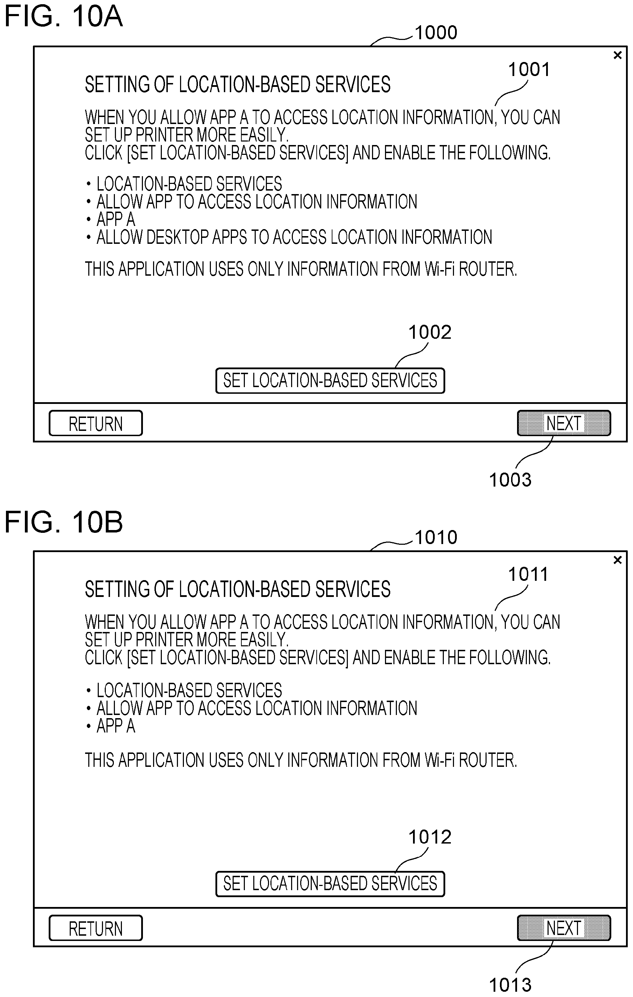

In S809, the CPU 103 displays a guidance screen for prompting the user to allow App A to use the location-based services. A guidance screen 1010 shown in Fig. 10B is an example of the guidance screen displayed in S809. The guidance screen 1010 contains a region 1011 that displays a message for prompting the user to allow App A to use the location-based services and a message indicating an operation for allowing App A to use the location-based services. The guidance screen 1010 may contain a message indicating information acquired by App A as information about the location-based services. In other words, in the present embodiment, the guidance screen 1010 may contain, for example, a message indicating that App A acquires information about an AP (Wi-Fi router) as the information about the location-based services. The guidance screen 1010 contains a button 1012 for displaying the settings screen 300. The button 1012 is similar to the button 502. Even when the button 1012 is operated and the settings screen 300 is displayed, the display of the guidance screen 1010 is maintained. Therefore, the user can operate the button 1013 contained in the guidance screen 1010 after allowing the predetermined app to use the location-based services on the settings screen 300. When the button 1013 is operated, the CPU 103 proceeds to S818.

In S810, the CPU 103 determines whether App B has been launched through the process of S803. This process is similar to that of S805. When the determination is affirmative in this determination, the CPU 103 proceeds to S812; whereas, when the determination is negative, the CPU 103 proceeds to S811.

In S811, the CPU 103 displays a navigation screen that navigates the user to allow App B to execute processes that need an administrator privilege. The reason why the navigation screen is not displayed when the determination result of S805 is negative and the navigation screen is displayed when the determination result of S810 is negative is because, with the administrator account, it is possible to easily allow App B to execute processes that need an administrator privilege without inputting a password. After that, the CPU 103 proceeds to S803.

In S812, the CPU 103 calls the predetermined API with App A. This process is similar to that of S806.

In S813, the CPU 103 causes App A to instruct App B to call the predetermined API. When the instructions are provided, the CPU 103 calls the predetermined API with App B. The process that the OS executes when the predetermined API is called is as described in the description of S401. In this process, the predetermined API is called by App B, so information notified from the OS varies depending on whether App B is allowed to use the location-based services. When App B accepts a notification, App B transmits the accepted notification content to App A. When App A has the notification content, App A is able to determine whether App B is allowed to use the location-based services. In the present embodiment, it is assumed that instructions to call the first API among the first to fourth APIs are provided in S813; however, the configuration is not limited thereto. Instructions to call any API may be provided as long as the API is a predetermined API, and specifically, for example, instructions to call the third API may be provided.

In S814, the CPU 103 determines whether both App A and App B are allowed to use the location-based services. The determination of whether App A is allowed to use the location-based services is similar to that of S402. In other words, the CPU 103 determines whether a code corresponding to a successful access of the predetermined API to information has been notified as a result of calling of the predetermined API. The determination of whether App B is allowed to use the location-based services is performed by determining whether the notification content accepted by App B from the OS corresponds to a code indicating that access to information by the predetermined API is successful. When the determination is affirmative in this determination based on the fact that both App A and App B are allowed to use the location-based services, the CPU 103 proceeds to S818. On the other hand, when the determination is negative in this determination because of the fact that at least one of App A and App B is not allowed to use the location-based services, the CPU 103 proceeds to S815.

In S815, the CPU 103 identifies the type of user account currently logged in to the terminal apparatus 101 and determines whether the identified account is an administrator account (or a standard user account). This process is similar to that of S804. When the determination is affirmative in this determination, the CPU 103 proceeds to S816; whereas, when the determination is negative, the CPU 103 proceeds to S817.

In S816, the CPU 103 displays a guidance screen for prompting the user to allow App A and App B to use the location-based services. A guidance screen 1000 shown in Fig. 10A is an example of the guidance screen displayed in S816. The guidance screen 1000 is a screen for allowing not only App A but also App B to use the location-based services. Therefore, the guidance screen 1000 partially differs in the content of the display from the guidance screen 1010 that is a screen for allowing App A to use the location-based services. The guidance screen 1000 contains a region 1001 that displays a message for prompting the user to allow App A and App B to use the location-based services and a message indicating an operation for allowing App A and App B to use the location-based services. The guidance screen 1000 may contain a message indicating information acquired by App A and App B as information about the location-based services. In other words, in the present embodiment, the guidance screen 1000 may contain, for example, a message indicating that App A and App B acquire information about an AP (Wi-Fi router) as the information about the location-based services. The guidance screen 1000 contains a button 1002 for displaying the settings screen 300. The button 1002 is similar to the button 502. Even when the button 1002 is operated and the settings screen 300 is displayed, the display of the guidance screen 1000 is maintained. Therefore, the user can operate a button 1003 contained in the guidance screen 1000 after allowing the predetermined app to use the location-based services on the settings screen 300. When the button 1003 is operated, the CPU 103 proceeds to S818.

In S817, the CPU 103 saves, in the memory, the content of current settings about permissions to use the location-based services for App A and App B. In other words, the CPU 103 saves, in the memory, information indicating settings corresponding to the fact that App A and App B are not allowed to use the location-based services. After that, the CPU 103 proceeds to S818.

It is also applicable that S817 is not executed. In other words, App A does not need to manage the content of current settings about permissions to use the location-based services for App A and App B.

In S818, the CPU 103 acquires information about the network to which the terminal apparatus 101 is currently connected via Wi-Fi. Specifically, in S818, the CPU 103 calls the third API with App A. When App A is allowed to use the location-based services, acquisition of information about the network to which the terminal apparatus 101 is currently connected via Wi-Fi succeeds by calling of this API. Therefore, the network to which the terminal apparatus 101 is currently connected via Wi-Fi is, in other words, the network to which the terminal apparatus 101 is connected via Wi-Fi when the third API is called. When App A is not allowed to use the location-based services, acquisition of information about the network to which the terminal apparatus 101 is currently connected via Wi-Fi fails even when this API is called. When the terminal apparatus 101 is currently not connected to any network via Wi-Fi, calling of API succeeds; however, information about the network to which the terminal apparatus 101 is currently connected via Wi-Fi is not acquired. When acquisition of information about an AP is successful through calling of API in S806 or S812, the API for acquiring information about the network to which the terminal apparatus 101 is currently connected via Wi-Fi does not need to be called in S818. Then, the information acquired through calling of API in S806 or S812 may be used in the following process. Calling of the third API may be executed by App B instead of App A. Then, it is applicable that App A acquires, from App B, information acquired by App B through calling of the third API.

Furthermore, in S818, the CPU 103 detects (finds) the communication apparatus 151 present around the terminal apparatus 101 and operating in connection setup mode. Specifically, in S818, the CPU 103 calls the fourth API with App A to cause the OS to search for wireless networks accessible by the terminal apparatus 101. After that, the CPU 103 calls the first API with App A to acquire, from the OS, information about a list of wireless networks accessible by the terminal apparatus 101. Then, the access point formed by the communication apparatus 151 operating in connection setup mode is detected from a list of wireless networks accessible by the terminal apparatus 101. The second API may be called instead of the first API. Calling of the first API or the second API may be executed by App B instead of App A. Then, it is applicable that App A acquires, from App B, information acquired by App B through calling of the first API or the second API.

Furthermore, in S818, the CPU 103 acquires the wireless profile corresponding to the network to which the terminal apparatus 101 is currently connected via Wi-Fi. Specifically, in S818, when the CPU 103 identifies that App B is running, the CPU 103 causes App A to instruct App B to acquire the wireless profile corresponding to the network to which the terminal apparatus 101 is currently connected via Wi-Fi. App B that has accepted the instructions initially acquires the identification information of the network to which the terminal apparatus 101 is currently connected via Wi-Fi, by calling the third API. Then, App B specifies the acquired identification information and requests the wireless profile from the OS, to acquire, from the OS, the wireless profile corresponding to the network to which the terminal apparatus 101 is currently connected via Wi-Fi. The process of acquiring a wireless profile that includes a password is a process that needs an administrator privilege. Then, when App B is running, App B is allowed to execute processes that need an administrator privilege. Therefore, here, the wireless profile acquired by App B is a wireless profile that includes a password. After that, App B transmits the acquired wireless profile to App A. As a result, App A acquires wireless profiles. When App B is not allowed to use the location-based services, App B is not able to acquire identification information even when the third API is called. As a result, it is not possible to acquire the wireless profile with specified identification information, so both App A and App B fail to acquire the wireless profile. Not limited to this configuration, when the CPU 103 identifies that App B is not allowed to use the location-based services, the identification information may be acquired by App A by calling the third API with App A. Then, App A may specify the acquired identification information and request the wireless profile from the OS, to acquire, from the OS, the wireless profile corresponding to the network to which the terminal apparatus 101 is currently connected via Wi-Fi. In S818, when the CPU 103 identifies that App B has not been launched, the CPU 103 calls the third API with App A to acquire identification information with App A. Then, App A specifies the acquired identification information and requests the wireless profile from the OS, to acquire, from the OS, the wireless profile corresponding to the network to which the terminal apparatus 101 is currently connected via Wi-Fi. However, since App A cannot execute processes that need an administrator privilege, the wireless profile acquired by App A is assumed not to include a password. In this case, the CPU 103 may display an input screen for accepting the input of a password using the predetermined app. Then, in the connection setup process, the password input on the input screen may be used instead of the password acquired through the execution of the predetermined API.

When App A is not allowed to use the location-based services, App A cannot acquire identification information even when App A calls the third API. As a result, it is not possible to acquire the wireless profile with specified identification information, so both App A and App B fail to acquire the wireless profile.

In S818, the CPU 103 may acquire not only the wireless profile corresponding to the network to which the terminal apparatus 101 is currently connected via Wi-Fi but also other wireless profiles. Specifically, for example, the CPU 103 may acquire wireless profiles corresponding to wireless networks included in a list of wireless networks accessible by the terminal apparatus 101, as indicated by the information acquired from the OS through calling of the first API and the second API.

A method of acquiring wireless profiles is not limited to the above-described configuration. For example, the CPU 103 may request all wireless profiles managed and stored by the terminal apparatus 101 from the OS. Then, from the multiple wireless profiles obtained in this way, the wireless profile corresponding to the network to which the terminal apparatus 101 is currently connected via Wi-Fi may be identified. Similarly, from the multiple wireless profiles obtained in this way, the wireless profiles corresponding to the wireless networks included in the list of wireless networks accessible by the terminal apparatus 101 may be identified.

In S818, the CPU 103 further acquires information that can be acquired even when App A or App B is not allowed to use the location-based services. Specifically, the CPU 103 acquires information about the Wi-Fi connection (wireless LAN connection) of the terminal apparatus 101 and information about the wired LAN connection of the terminal apparatus 101 as information that can be acquired even when App A or App B is not allowed to use the location-based services. The information about the Wi-Fi connection of the terminal apparatus 101 and information about the wired LAN connection of the terminal apparatus 101 specifically include, for example, information indicating whether IPv4 or IPv6 is enabled and information indicating IP addresses, MAC addresses, and channels being used for connection. When the terminal apparatus 101 has not established a Wi-Fi connection, information about the Wi-Fi connection of the terminal apparatus 101 is not acquired. When the terminal apparatus 101 has not established a wired LAN connection, information about the wired LAN connection of the terminal apparatus 101 is not acquired. Therefore, in this process, the network to which the terminal apparatus 101 is connected is identified based on whether the information has been acquired.

In S818, the CPU 103 searches for the communication apparatus 151 that supports the predetermined app on the network to which the terminal apparatus 101 is connected. The communication apparatus 151 that supports the predetermined app is, for example, the communication apparatus 151 provided by the same vendor as the vendor of the predetermined app.

The information acquired in S818 is not limited to the above-described configuration. Only one of the above-described pieces of information may be acquired, or other information may be acquired. Specifically, for example, it is applicable that a wireless profile is not acquired or the SSID included in a wireless profile is acquired but the password is not acquired. Therefore, for example, the information acquired in S812 or S813 and the information acquired in S818 may be different from each other because of the condition that the API called in S812 or S813 and the API called in S818 are different from each other.

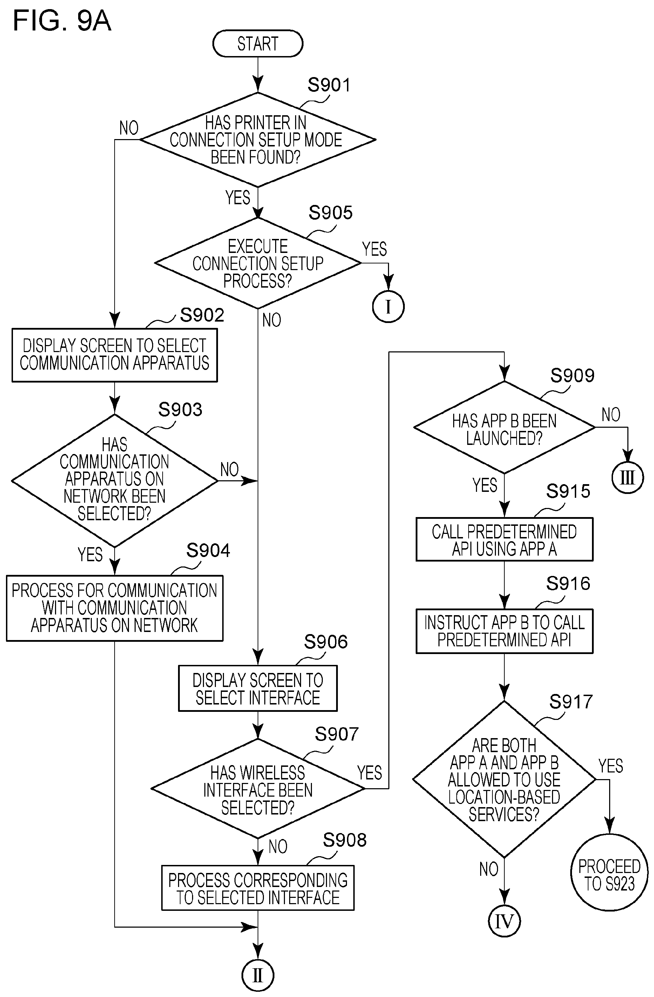

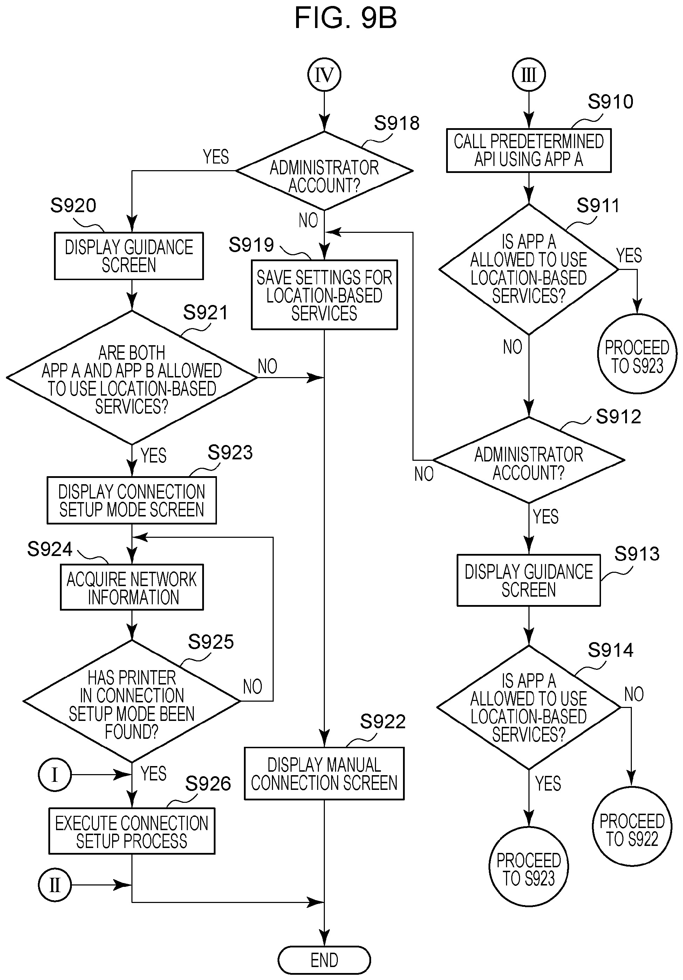

After that, the CPU 103 ends the process of this flowchart and starts the process of the flowchart shown in Figs. 9A and 9B.

Figs. 9A and 9B show a flowchart that shows an example of processes that are executed by the terminal apparatus 101 using the predetermined app in the present embodiment. The processes of the flowchart of Figs. 9A and 9B are implemented, for example, when the CPU 103 unfolds a predetermined app stored in the memory, that is, the ROM 104 or the like, to the RAM 105 and executes the predetermined app. The flowchart of Figs. 9A and 9B is started based on the end of the process of the flowchart of Fig. 8.

In S901, the CPU 103 determines whether the communication apparatus 151 operating in connection setup mode has been found through the process of S818. When the determination is affirmative in this determination, the CPU 103 proceeds to S905; whereas, when the determination is negative, the CPU 103 proceeds to S902.

In S902, the CPU 103 displays a selection screen for selecting one from among one or more communication apparatuses 151. This process is similar to that of S409. The search for the communication apparatus 151 that supports the predetermined app on the network to which the terminal apparatus 101 is connected is assumed to be executed in S818.

In S903, the CPU 103 determines whether the communication apparatus 151 found on the network to which the terminal apparatus 101 is connected has been selected on the selection screen 510. This process is similar to that of S410. When the CPU 103 makes an affirmative determination, the CPU 103 proceeds to S904; whereas, when the CPU 103 makes a negative determination, the CPU 103 proceeds to S906.

In S904, the CPU 103 executes various setup processes for communicating with the communication apparatus 151 selected on the selection screen 510. Specifically, for example, the CPU 103 executes a process for installing a printer driver corresponding to the communication apparatus 151 on the terminal apparatus 101. After that, the CPU 103 ends the process of this flowchart.

In S905 that is executed when the determination is affirmative in S901, the CPU 103 determines whether to execute a connection setup process. Specifically, in S905, the CPU 103 determines whether the terminal apparatus 101 is currently connected to the network via Wi-Fi. The CPU 103 determines whether the function for using IPv4 is enabled on the terminal apparatus 101. The CPU 103 determines whether the wireless profile corresponding to the network to which the terminal apparatus 101 is currently connected via Wi-Fi has been acquired. These determinations are performed using the information acquired in S818. Then, the case where all the determination results are affirmative corresponds to the case where it is determined to execute the connection setup process. Then, the case where at least one determination result is negative corresponds to the case where it is determined not to execute the connection setup process. When the CPU 103 makes an affirmative determination, the CPU 103 proceeds to S926; whereas, when the CPU 103 makes a negative determination, the CPU 103 proceeds to S906.

In S906, the CPU 103 displays an interface selection screen for accepting user's selection of an interface used for connection between the terminal apparatus 101 and the communication apparatus 151. In the present embodiment, with the interface selection screen, it is possible to select one of an interface that corresponds to a wireless LAN, an interface that corresponds to a wired LAN, and an interface that corresponds to a USB. The interface selection screen is, in other words, a screen to select a method for connection between the terminal apparatus 101 and the communication apparatus 151, and to allow selection of one of a wireless LAN, a wired LAN, and a USB as a method for connection.

In S907, the CPU 103 determines whether the interface corresponding to a wireless LAN has been selected on the interface selection screen. When the CPU 103 makes an affirmative determination, the CPU 103 proceeds to S909; whereas, when the CPU 103 makes a negative determination, the CPU 103 proceeds to S908. The case where the determination is negative is, specifically, for example, the case where the interface selected on the interface selection screen is an interface corresponding to a wired LAN or an interface corresponding to a USB.

In S908 that is executed when the determination is negative in S907, the CPU 103 executes a process corresponding to the interface selected on the interface selection screen. Specifically, for example, the CPU 103 displays a screen that prompts the user to establish a connection between the terminal apparatus 101 and the communication apparatus 151 using the interface selected on the interface selection screen. The CPU 103 searches for the communication apparatus 151 on the network to which the selected interface is connected on the interface selection screen. Then, when the communication apparatus 151 has been found, the CPU 103 performs various settings so as to be able to communicate with the communication apparatus 151 using the interface selected on the interface selection screen. Specifically, for example, the CPU 103 executes a process for installing a printer driver corresponding to the communication apparatus 151 on the terminal apparatus 101. After that, the CPU 103 ends the process of this flowchart.

In S909 that is executed when the determination is affirmative in S907, the CPU 103 determines whether App B has been launched through the process of S803. This process is similar to that of S805. When the determination is affirmative in this determination, the CPU 103 proceeds to S915; whereas, when the determination is negative, the CPU 103 proceeds to S910.

In S910 that is executed when the determination is negative in S909, the CPU 103 calls a predetermined API with App A. This process is similar to that of S806.

In S911, the CPU 103 determines whether App A is allowed to use the location-based services. This process is similar to that of S807. When the determination is affirmative in this determination, the CPU 103 proceeds to S923; whereas, when the determination is negative, the CPU 103 proceeds to S912.

In S912 that is executed when the determination is negative in S910, the CPU 103 identifies the type of user account currently logged in to the terminal apparatus 101 and determines whether the identified account is an administrator account (or a standard user account).

This process is similar to that of S804. When the determination is affirmative in this determination, the CPU 103 proceeds to S913; whereas, when the determination is negative, the CPU 103 proceeds to S919.

In S913 that is executed when the determination is affirmative in S912, the CPU 103 displays a guidance screen for prompting the user to allow App A to use the location-based services. This process is similar to that of S809. When the button 1013 is operated, the CPU 103 proceeds to S914.

In S914, the CPU 103 determines again whether App A is allowed to use the location-based services. This process is similar to that of S911. When the user allows App A to use the location-based services through the display of the guidance screen in S912, the determination is affirmative in this determination. When the determination is affirmative in this determination, the CPU 103 proceeds to S923; whereas, when the determination is negative, the CPU 103 proceeds to S922.

In S915 that is executed when the determination is affirmative in S909, the CPU 103 calls a predetermined API with App A. This process is similar to that of S806.

In S916, the CPU 103 causes App A to instruct App B to call the predetermined API. This process is similar to that of S813.

In S917, the CPU 103 determines whether both App A and App B are allowed to use the location-based services. This process is similar to that of S814. When the determination is affirmative in this determination, the CPU 103 proceeds to S923; whereas, when the determination is negative, the CPU 103 proceeds to S918.

In S918 that is executed when the determination is negative in S917, the CPU 103 identifies the type of user account currently logged in to the terminal apparatus 101 and determines whether the identified account is an administrator account (or a standard user account).

This process is similar to that of S804. When the determination is affirmative in this determination, the CPU 103 proceeds to S920; whereas, when the determination is negative, the CPU 103 proceeds to S919.

In S919 that is executed when the determination is negative in S912 or when the determination is negative in S918, the CPU 103 saves, in the memory, the content of current settings about permissions to use the location-based services for App A and App B. In other words, the CPU 103 saves, in the memory, information indicating settings corresponding to the fact that App A and App B are not allowed to use the location-based services. After that, the CPU 103 proceeds to S922. It is also applicable that S919 is not executed. In other words, App A does not need to manage the content of current settings about permissions to use the location-based services for App A and App B. In this configuration, when the determination is negative in S912 or when the determination is negative in S918, the CPU 103 proceeds to S922 without executing S919.

In S920 that is executed when the determination is affirmative in S918, the CPU 103 displays a guidance screen for prompting the user to allow App A and App B to use the location-based services. This process is similar to that of S816. When the button 1003 is operated, the CPU 103 proceeds to S921.

In S921, the CPU 103 determines again whether both App A and App B are allowed to use the location-based services. This process is similar to that of S917. When the user allows App A to use the location-based services through the display of the guidance screen in S912, the determination is affirmative in this determination. When the determination is affirmative in this determination, the CPU 103 proceeds to S923; whereas, when the determination is negative, the CPU 103 proceeds to S922.

In S922 that is executed when the determination is negative in S914 or when the determination is negative in S921, the CPU 103 displays a guidance screen about manual connection as a process for manual connection. This process is similar to that of S412. After that, the process of this flowchart ends.

As described above, S923 is executed when the determination is affirmative in S911, when the determination is affirmative in S914, when the determination is affirmative in S917, or when the determination is affirmative in S921. Then, in S923, the CPU 103 displays a guidance screen for operating the communication apparatus 151 in connection setup mode as a process for executing the connection setup process. This process is similar to that of S413. The guidance screen displayed in S923 may contain a button for connecting the communication apparatus 151 to any of the networks without executing the connection setup process. Then, when the button is operated, the CPU 103 may proceed to S922.

In S924, the CPU 103 acquires information about the network to which the terminal apparatus 101 is currently connected via Wi-Fi. This process is similar to that of S818.

In S925, the CPU 103 determines whether the communication apparatus 151 operating in connection setup mode has been found through the process of S924. This process is similar to that of S901.

When the determination is affirmative in this determination, the CPU 103 proceeds to S926; whereas, when the determination is negative, the CPU 103 returns to S924 and continues searching for the communication apparatus 151 operating in connection setup mode.

In S926, the CPU 103 executes the connection setup process for the communication apparatus 151. This process is similar to that of S415. When S926 is executed after the execution of S925, the communication apparatus 151 that is a target of the connection setup process and that is a target to which the terminal apparatus 101 is connected in S701 is assumed to be the communication apparatus 151 operating in connection setup mode and found in S924. When S926 is executed after the determination is affirmative in S905, the communication apparatus 151 that is a target of the connection setup process and that is a target to which the terminal apparatus 101 is connected in S701 is assumed to be the communication apparatus 151 operating in connection setup mode and found in S818. The information acquired in S818 or S924 is used in the connection setup process that is executed in S926, instead of the information described as information acquired in S408 in the description of the flowchart of Fig. 7. After that, the CPU 103 ends the process of this flowchart.

With this configuration, App A can determine whether App B is allowed to use the location-based services. Then, when it is determined that App B is not allowed to use the location-based services, App A is able to execute a process for allowing App B to use the location-based services.

The configuration in which the predetermined app is a UWP app has been described above; however, the configuration is not limited thereto. For example, the predetermined app may be an app that is configured by packaging a UWP app and a desktop app through a mechanism, such as Desktop Bridge. The desktop app packaged here is a desktop app different from App B, and App B is installed on the terminal apparatus 101 separately from the desktop app packaged. In the case of this configuration, a predetermined app includes a module corresponding to a UWP app and a module corresponding to a desktop app. Then, in the case of this configuration, the process of the flowcharts of Figs. 8 and 9 may be realized by the module corresponding to the desktop app among modules included in the predetermined app. In other words, the processes described as the processes executed by the predetermined app in the flowcharts of Figs. 8 and 9 may be processes executed by a module corresponding to the desktop app within the predetermined app. Even when the OS operating on the terminal apparatus 101 is an S-mode OS, the module corresponding to the desktop app within the predetermined app can execute a process.

### Other Embodiments

In the above embodiments, the configuration in which the connection between the communication apparatus 151 operating in connection setup mode and the terminal apparatus 101 is Wi-Fi has been described; however, the configuration is not limited thereto. The connection between the communication apparatus 151 operating in connection setup mode and the terminal apparatus 101 may be established by a communication method other than Wi-Fi, such as Bluetooth Classic and Bluetooth Low Energy. In this configuration, the terminal apparatus 101 may maintain a Wi-Fi connection with an AP even while establishing a connection between the communication apparatus 151 operating in connection setup mode and the terminal apparatus 101. In this configuration, the predetermined API is not used in the process of searching for the communication apparatus 151 operating in connection setup mode, but the predetermined API is used in, for example, a process of acquiring information about an AP to which the terminal apparatus 101 is connected. Therefore, a determination of whether the predetermined app is allowed to use the location-based services is performed.

The present disclosure is also implemented by supplying a system or an apparatus with a recording medium on which a program code of software that implements the functions of the above-described embodiments is recorded. In other words, the present disclosure is also implemented by a computer (or a CPU or an MPU) of the system or apparatus reading and executing the program code stored in the recording medium. In this case, the program code itself read from the recording medium implements the functions of the above-described embodiments, and the recording medium storing the program code constitutes the present disclosure.

Examples of the recording medium for supplying a program code include a flexible disk, a hard disk drive, an optical disk, a magneto-optical disc, a CD-ROM, a CD-R, a magnetic tape, a nonvolatile memory card, a ROM, and a DVD.

Of course, the present disclosure also encompasses a case where the OS or the like operating on a computer executes some or all of actual processes based on instructions of a program code read by the computer and the functions of the above-described embodiments are implemented by those processes.

The disclosure of the present embodiment includes the following configurations.

### Item 1

A program being a predetermined application program and including instructions which, when the program is executed by a computer of an information processing apparatus, cause the computer to function as:
calling means for calling a predetermined application programming interface, API, for acquiring predetermined information acquired by the information processing apparatus using a wireless local area network, LAN, function from an operating system, OS, of the information processing apparatus;
first determination means for determining whether acquisition of the predetermined information by the predetermined application program is successful through calling of the predetermined API; and
first execution means for not executing a predetermined process for causing a user to perform an operation for allowing the predetermined application program to use a location-based service based on successful acquisition of the predetermined information by the predetermined application program, and executing the predetermined process based on failure to acquire the predetermined information by the predetermined application program, wherein
when the predetermined application program is allowed to use the location-based service, acquisition of the predetermined information by the predetermined application program succeeds through calling of the predetermined API, and
when the predetermined application program is not allowed to use the location-based service, acquisition of the predetermined information by the predetermined application program fails even when the predetermined API is called.

### Item 2

The program according to Item 1, further including instructions which, when the program is executed by the computer, cause the computer to further function as second determination means for determining whether a user account logged in to the information processing apparatus is an administrator account, wherein
based on failure to acquire the predetermined information by the predetermined application program and a determination that the user account logged in to the information processing apparatus is an administrator account, the predetermined process is executed. Item 3

The program according to Item 2, wherein, when it is determined that the user account logged in to the information processing apparatus is not an administrator account, the predetermined process is not executed even when the predetermined application program is not allowed to use the location-based service.

### Item 4

The program according to any one of Items 1 to 3, further including instructions which, when the program is executed by the computer, cause the computer to further function as second execution means for executing a connection setup process for connecting a communication apparatus outside the information processing apparatus to any of networks using the predetermined information acquired through calling of the predetermined API.

### Item 5

The program according to Item 4, wherein
the predetermined information used in the connection setup process and acquired through calling of the predetermined API includes information about a list of wireless networks accessible by the information processing apparatus,
the connection setup process includes a process of detecting a network formed by the communication apparatus operating in a mode for the connection setup process from among the list of wireless networks accessible by the information processing apparatus, and a process of establishing a connection between the information processing apparatus and the network formed by the communication apparatus operating in the mode for the connection setup process, and
information for connecting the communication apparatus to any of networks is transmitted to the communication apparatus via the connection between the information processing apparatus and the network formed by the communication apparatus operating in the mode for the connection setup process.

### Item 6

The program according to Item 4 or 5, wherein
the predetermined information used in the connection setup process and acquired through calling of the predetermined API includes information about a network to which the information processing apparatus was connected via a wireless LAN when the predetermined API was called, and
the connection setup process includes a process of transmitting the information about the network to which the information processing apparatus was connected via a wireless LAN when the predetermined API was called, to the communication apparatus. Item 7

The program according to Item 6, wherein the information about the network to which the information processing apparatus was connected via a wireless LAN when the predetermined API was called includes identification information and password of the network to which the information processing apparatus was connected via a wireless LAN when the predetermined API was called.

### Item 8

The program according to any one of Items 4 to 7, wherein the predetermined information used in the connection setup process is acquired by the predetermined API called after it is determined whether acquisition of the predetermined information by the predetermined application program is successful.

### Item 9

The program according to any one of Items 4 to 8, wherein the predetermined API used to acquire the predetermined information used to determine whether acquisition of the predetermined information by the predetermined application program is successful is different from the predetermined API used to acquire the predetermined information used in the connection setup process.

### Item 10

The program according to any one of Items 1 to 9, further including instructions which, when the program is executed by the computer, cause the computer to further function as display control means for executing a display process to display a screen about a radio wave condition between the information processing apparatus and an access point to which the information processing apparatus is connected, using the predetermined information acquired through calling of the predetermined API.

### Item 11

The program according to Item 10, wherein the predetermined information used in the display process and acquired through calling of the predetermined API includes information about a radio wave condition between the information processing apparatus and an access point to which the information processing apparatus is connected.

### Item 12

The program according to Item 10 or 11, further including instructions which, when the program is executed by the computer, cause the computer to further function as receiving means for receiving information about a radio wave condition between a communication apparatus outside the information processing apparatus and an access point to which the communication apparatus is connected, from the communication apparatus, without calling the predetermined API, wherein
a screen about a radio wave condition between the communication apparatus and an access point to which the communication apparatus is connected is further displayed using the information about the radio wave condition between the communication apparatus and the access point to which the communication apparatus is connected.

### Item 13

The program according to any one of Items 1 to 12, further including
instructions which, when the program is executed by the computer, cause the computer to run a different application program different from the predetermined application program to function as: instruction means for providing an instruction to call the predetermined API;
third determination means for determining whether acquisition of the predetermined information by the different application program is successful through calling of the predetermined API; and
third execution means for not executing a specific process for causing a user to perform an operation for allowing the different application program to use the location-based service based on successful acquisition of the predetermined information by the different application program, and executing the specific process based on failure to acquire the predetermined information by the different application program, wherein
when the different application program is allowed to use the location-based service, acquisition of the predetermined information by the different application program succeeds through calling of the predetermined API by the different application program, and
when the different application program is not allowed to use the location-based service, acquisition of the predetermined information by the different application program fails even when the predetermined API is called by the different application program. Item 14

The program according to Item 13, further including fourth execution means for executing a connection setup process for causing a communication apparatus outside the information processing apparatus to connect to any of networks using the predetermined information acquired through calling of the predetermined API by the predetermined application program and the predetermined information acquired through calling of the predetermined API by the different application program.

### Item 15

The program according to Item 14, wherein
the predetermined information acquired through calling of the predetermined API by the different application program includes a password of any of networks, and
the connection setup process includes a process of transmitting information including the password of the any of networks to the communication apparatus.

### Item 16

The program according to any one of Items 13 to 15, wherein the predetermined application program is a universal Windows platform, UWP, application program, and the different application program is a desktop application program.

### Item 17

The program according to any one of Items 13 to 15, wherein the predetermined application program is an application program configured by packaging a universal Windows platform, UWP, application program and a desktop application program, and the different application program is a desktop application program.

### Item 18

The program according to any one of Items 1 to 17, wherein the predetermined process is a process of displaying a screen for causing a user to perform an operation for allowing the predetermined application program to use the location-based service.

### Item 19

The program according to any one of Items 1 to 18, further including transmission means for transmitting a print job for causing a communication apparatus outside the information processing apparatus to perform printing, to the communication apparatus.

### Item 20

The program according to any one of Items 1 to 19, wherein the OS of the information processing apparatus is Windows (registered trademark) OS.

### Item 21

The program according to any one of Items 1 to 20, wherein the predetermined API is an API that supports Windows (registered trademark) OS, and is one of WlanGetAvailableNetworkList, WlanGetAvailableBSSList, WlanQuery Interface, and WlanScan.

### Item 22

An information processing apparatus including a predetermined application program, the information processing apparatus being configured to execute:
calling means for calling a predetermined API for acquiring predetermined information acquired by the information processing apparatus using a wireless local area network, LAN, function from an operating system, OS, of the information processing apparatus;
first determination means for determining whether acquisition of the predetermined information by the predetermined application program is successful through calling of the predetermined API; and
first execution means for not executing a predetermined process for causing a user to perform an operation for allowing the predetermined application program to use a location-based service based on successful acquisition of the predetermined information by the predetermined application program, and executing the predetermined process based on failure to acquire the predetermined information by the predetermined application program, wherein
when the predetermined application program is allowed to use the location-based service, acquisition of the predetermined information by the predetermined application program succeeds through calling of the predetermined API, and
when the predetermined application program is not allowed to use the location-based service, acquisition of the predetermined information by the predetermined application program fails even when the predetermined API is called.

### Item 23

A control method for an information processing apparatus having a predetermined application program, the control method including:
a calling step of calling a predetermined application programming interface, API, for acquiring predetermined information acquired by the information processing apparatus using a wireless local area network, LAN, function from an operating system, OS, of the information processing apparatus;
a first determination step of determining whether acquisition of the predetermined information by the predetermined application program is successful through calling of the predetermined API; and
a first execution step of not executing a predetermined process for causing a user to perform an operation for allowing the predetermined application program to use a location-based service based on successful acquisition of the predetermined information by the predetermined application program, and executing the predetermined process based on failure to acquire the predetermined information by the predetermined application program, wherein
when the predetermined application program is allowed to use the location-based service, acquisition of the predetermined information by the predetermined application program succeeds through calling of the predetermined API, and
when the predetermined application program is not allowed to use the location-based service, acquisition of the predetermined information by the predetermined application program fails even when the predetermined API is called.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A program being a predetermined application program and including instructions which, when the program is executed by a computer (103, 104, 105) of an information processing apparatus (101), cause the computer to function as:
calling means (S401) for calling a predetermined application programming interface, API, for acquiring predetermined information acquired by the information processing apparatus (101) using a wireless local area network, LAN, function from an operating system, OS, of the information processing apparatus (101);
first determination means (S402) for determining whether acquisition of the predetermined information by the predetermined application program is successful through calling of the predetermined API; and
first execution means (S404) for not executing a predetermined process for causing a user to perform an operation for allowing the predetermined application program to use a location-based service based on successful acquisition of the predetermined information by the predetermined application program, and executing the predetermined process based on failure to acquire the predetermined information by the predetermined application program, wherein
when the predetermined application program is allowed to use the location-based service, acquisition of the predetermined information by the predetermined application program succeeds through calling of the predetermined API, and
when the predetermined application program is not allowed to use the location-based service, acquisition of the predetermined information by the predetermined application program fails even when the predetermined API is called.

2. The program according to claim 1, further comprising instructions which, when the program is executed by the computer (103, 104, 105), cause the computer to further function as second determination means (S403) for determining whether a user account logged in to the information processing apparatus (101) is an administrator account, wherein
based on failure to acquire the predetermined information by the predetermined application program and a determination that the user account logged in to the information processing apparatus (101) is an administrator account, the predetermined process is executed.

3. The program according to claim 2, wherein, when it is determined that the user account logged in to the information processing apparatus (101) is not an administrator account, the predetermined process is not executed even when the predetermined application program is not allowed to use the location-based service.

4. The program according to claim 1, further comprising instructions which, when the program is executed by the computer (103, 104, 105), cause the computer to further function as second execution means (S415) for executing a connection setup process for connecting a communication apparatus (151) outside the information processing apparatus (101) to any of networks using the predetermined information acquired through calling of the predetermined API.

5. The program according to claim 4, wherein
the predetermined information used in the connection setup process and acquired through calling of the predetermined API includes information about a list of wireless networks accessible by the information processing apparatus (101),
the connection setup process includes a process of detecting a network formed by the communication apparatus (151) operating in a mode for the connection setup process from among the list of wireless networks accessible by the information processing apparatus (101), and a process of establishing a connection between the information processing apparatus (101) and the network formed by the communication apparatus (151) operating in the mode for the connection setup process, and
information for connecting the communication apparatus (151) to any of networks is transmitted to the communication apparatus (151) via the connection between the information processing apparatus (101) and the network formed by the communication apparatus (151) operating in the mode for the connection setup process.

6. The program according to claim 4, wherein
the predetermined information used in the connection setup process and acquired through calling of the predetermined API includes information about a network to which the information processing apparatus (101) was connected via a wireless LAN when the predetermined API was called, and
the connection setup process includes a process of transmitting the information about the network to which the information processing apparatus (101) was connected via a wireless LAN when the predetermined API was called, to the communication apparatus (151).

7. The program according to claim 6, wherein the information about the network to which the information processing apparatus (101) was connected via a wireless LAN when the predetermined API was called includes identification information and password of the network to which the information processing apparatus (101) was connected via a wireless LAN when the predetermined API was called.

8. The program according to claim 4, wherein the predetermined information used in the connection setup process is acquired by the predetermined API called after it is determined whether acquisition of the predetermined information by the predetermined application program is successful.

9. The program according to claim 4, wherein the predetermined API used to acquire the predetermined information used to determine whether acquisition of the predetermined information by the predetermined application program is successful is different from the predetermined API used to acquire the predetermined information used in the connection setup process.

10. The program according to claim 1, further comprising instructions which, when the program is executed by the computer (103, 104, 105), cause the computer to further function as display control means (S422) for executing a display process to display a screen about a radio wave condition between the information processing apparatus (101) and an access point to which the information processing apparatus (101) is connected, using the predetermined information acquired through calling of the predetermined API.

11. The program according to claim 10, wherein the predetermined information used in the display process and acquired through calling of the predetermined API includes information about a radio wave condition between the information processing apparatus (101) and an access point to which the information processing apparatus (101) is connected.

12. The program according to claim 10, further comprising instructions which, when the program is executed by the computer (103, 104, 105), cause the computer to further function as receiving means (S421) for receiving information about a radio wave condition between a communication apparatus (151) outside the information processing apparatus (101) and an access point (131) to which the communication apparatus is connected, from the communication apparatus, without calling the predetermined API, wherein
a screen about a radio wave condition between the communication apparatus (151) and an access point to which the communication apparatus (151) is connected is further displayed using the information about the radio wave condition between the communication apparatus (151) and the access point to which the communication apparatus is connected.

13. The program according to claim 1, further comprising instructions which, when the program is executed by the computer (103, 104, 105), cause the computer to run a different application program different from the predetermined application program to function as:
instruction means (S813) for providing an instruction to call the predetermined API;
third determination means (S814) for determining whether acquisition of the predetermined information by the different application program is successful through calling of the predetermined API; and
third execution means for not executing a specific process for causing a user to perform an operation for allowing the different application program to use the location-based service based on successful acquisition of the predetermined information by the different application program, and executing the specific process based on failure to acquire the predetermined information by the different application program, wherein
when the different application program is allowed to use the location-based service, acquisition of the predetermined information by the different application program succeeds through calling of the predetermined API by the different application program, and
when the different application program is not allowed to use the location-based service, acquisition of the predetermined information by the different application program fails even when the predetermined API is called by the different application program.

14. An information processing apparatus (101) comprising a predetermined application program, the information processing apparatus (101) being configured to execute:
calling means for calling a predetermined API for acquiring predetermined information acquired by the information processing apparatus (101) using a wireless local area network, LAN, function from an operating system, OS, of the information processing apparatus (101);
first determination means for determining whether acquisition of the predetermined information by the predetermined application program is successful through calling of the predetermined API; and
first execution means for not executing a predetermined process for causing a user to perform an operation for allowing the predetermined application program to use a location-based service based on successful acquisition of the predetermined information by the predetermined application program, and executing the predetermined process based on failure to acquire the predetermined information by the predetermined application program, wherein
when the predetermined application program is allowed to use the location-based service, acquisition of the predetermined information by the predetermined application program succeeds through calling of the predetermined API, and
when the predetermined application program is not allowed to use the location-based service, acquisition of the predetermined information by the predetermined application program fails even when the predetermined API is called.

15. A control method for an information processing apparatus (101) having a predetermined application program, the control method comprising:
a calling step of calling a predetermined application programming interface, API, for acquiring predetermined information acquired by the information processing apparatus (101) using a wireless local area network, LAN, function from an operating system, OS, of the information processing apparatus;
a first determination step of determining whether acquisition of the predetermined information by the predetermined application program is successful through calling of the predetermined API; and
a first execution step of not executing a predetermined process for causing a user to perform an operation for allowing the predetermined application program to use a location-based service based on successful acquisition of the predetermined information by the predetermined application program, and executing the predetermined process based on failure to acquire the predetermined information by the predetermined application program, wherein
when the predetermined application program is allowed to use the location-based service, acquisition of the predetermined information by the predetermined application program succeeds through calling of the predetermined API, and
when the predetermined application program is not allowed to use the location-based service, acquisition of the predetermined information by the predetermined application program fails even when the predetermined API is called.
